# EUROPEAN PATENT APPLICATION

(11) **EP 2 692 805 A1**
(43) Date of publication of application: **05.02.2014**
(21) Application number: 12765493.7
(22) Date of filing: 26.03.2012
(51) Int. Cl.: C09D 11/00, B41J 2/01, B41M 5/00

(54) **INK COMPOSITION AND IMAGE FORMING METHOD**

(30) Priority: 28.03.2011 JP 2011070716
(71) Applicant: FUJIFILM Corporation, Tokyo 106-8620 (JP)
(72) Inventor: YOKOI, Kazuhiro, Ashigarakami-gun Kanagawa 258-8577 (JP); ARAKI, Kenjiro, Ashigarakami-gun Kanagawa 258-8577 (JP)
(74) Representative: Morpeth, Fraser Forrest
(86) International application number: PCT/JP2012/057787
(87) International publication number: WO 2012/133335

(57) **Abstract**

An ink composition includes: a graft polymer having a graft main chain having at least one selected from the group consisting of a urethane structure and a urea structure, and a graft side chain including the following Structure Gs; a polymerizable compound; and a polymerization initiator, wherein the polymerizable compound comprises a monofunctional polymerizable compound, and a total content of the monofunctional polymerizable compound in the ink composition is 50% by mass or more with respect to a total content of the polymerizable compound, and wherein the Structure Gs comprises a structure having three or more repeating units, each of which is formed from an atomic group selected from the group consisting of a carbon atom, a hydrogen atom, an oxygen atom, a sulfur atom and a halogen atom, and in which an SP value of the repeating units is from 17 (MPa)^{1/2} to 20 (MPa)^{1/2}.

## Description

### Technical Field

The invention relates to an ink composition and an image forming method.

### Background Art

Examples of an image recording method for forming an image on a recording medium such as paper based on an image data signal, include an electrographic system, a sublimation and thermofusible heat transfer recording system, and an inkjet system. Among these, the inkjet system can be employed with an inexpensive device and by jetting ink only onto a required image part to perform image formation directly on a recording medium, and thus ink is efficiently used, and the running costs are low.

As an example of an ink composition used for such a recording system, an ink composition containing a graft polymer with a urethane structure is disclosed in Japanese Patent Application Laid-Open (JP-A) No. 2009-235121, in consideration of the storage stability of ink or the like.

### SUMMARY OF INVENTION

### Technical Problem

Meanwhile, in a case in which a molded article of plastic printed matter (for example, "*α dummy can*" (a display can) or a blister pack) is produced, adhesive property of an obtained image to a recording medium such as plastic base or the like is required if printing is performed according to an inkjet system.

However, in the technique of JP-A No. 2009-235121, there still needs to be improvement in terms of adhesion property. Improvement of wet heat resistance is also required.

Therefore, the invention is aims to address the issues described below.

That is, an object of the invention is to provide an ink composition that provides an image with excellent adhesion property and excellent wet heat resistance when the image is formed by curing, and to provide an image forming method using the ink composition. Solution to Problem

The inventors of the invention conducted intensive research in view of the problems described above. As a result, it was found that the problems can be solved by using an ink composition in which a specific polymer and a monofunctional polymerizable compound or the like are used in combination. The invention is completed accordingly. Thus, the invention relates to the ink composition and an image forming method using the ink composition, as described below.
<1> An ink composition comprising:
   a graft polymer having a graft main chain having at least one selected from the group consisting of a urethane structure and a urea structure, and a graft side chain including the following Structure Gs;
   a polymerizable compound; and
   a polymerization initiator,
   wherein the polymerizable compound comprises a monofunctional polymerizable compound, and a total content of the monofunctional polymerizable compound in the ink composition is 50% by mass or more with respect to a total content of the polymerizable compound, and
   wherein the Structure Gs comprises a structure having three or more repeating units, each of which is formed from an atomic group selected from the group consisting of a carbon atom, a hydrogen atom, an oxygen atom, a sulfur atom and a halogen atom, and in which an SP value of the repeating units is from 17 (MPa)^{1/2} to 20 (MPa)^{1/2}.
<2> The ink composition according to <1>, comprising a nitrogen atom-containing monofunctional polymerizable compound as the monofunctional polymerizable compound.
<3> The ink composition according to <2>, wherein the nitrogen atom-containing monofunctional polymerizable compound comprises a compound represented by the following Formula (M1) or (M2): 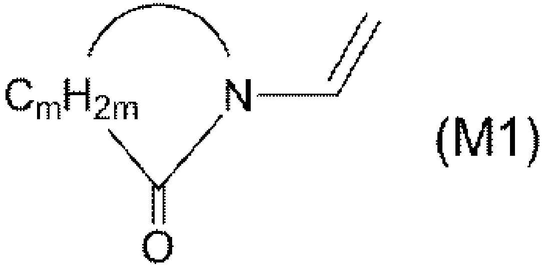 wherein, in Formula (M1), m represents an integer from 2 to 6,. and 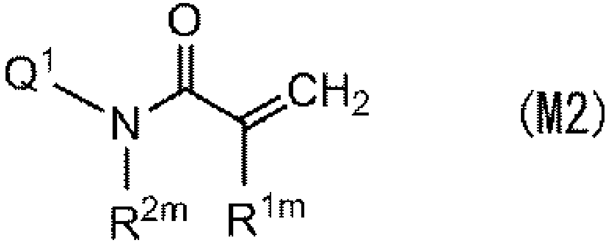 wherein, in Formula (M2), Q¹ represents a monovalent group; R^{1m} represents a hydrogen atom or a methyl group; R^{2m} represents a hydrogen atom, an alkyl group, or an aryl group; and Q¹ and R^{2m} may bind to each other to form a ring.
<4> The ink composition according to <2> or <3>, wherein a total content of the nitrogen atom-containing monofunctional polymerizable compound is from 10% by mass to 90% by mass with respect to a total content of the monofunctional polymerizable compound in the ink composition.
<5> The ink composition according to any one of <1> to <4>, wherein the repeating units in the Structure Gs comprise at least one selected from the group consisting of a polyethylene structure, a polypropylene structure, a poly(meth)acrylic acid ester structure, a polyester structure, and a polystyrene structure.
<6> The ink composition according to any one of <1> to <5>, wherein the graft main chain comprises both the urethane structure and the urea structure.
<7> The ink composition according to any one of <1> to <6>, wherein the graft polymer comprises at least one structure selected from the group consisting of the following Formula (G1) and the following Formula (G2): 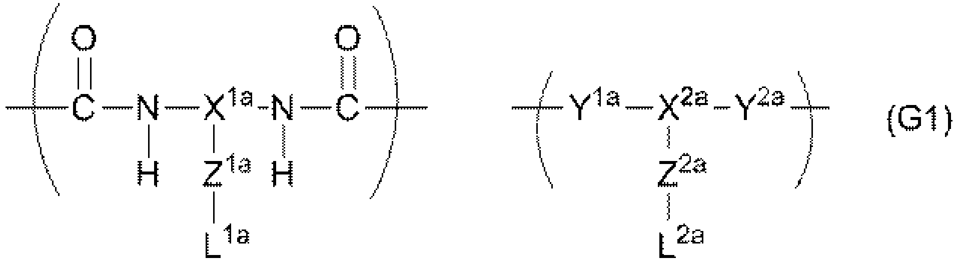 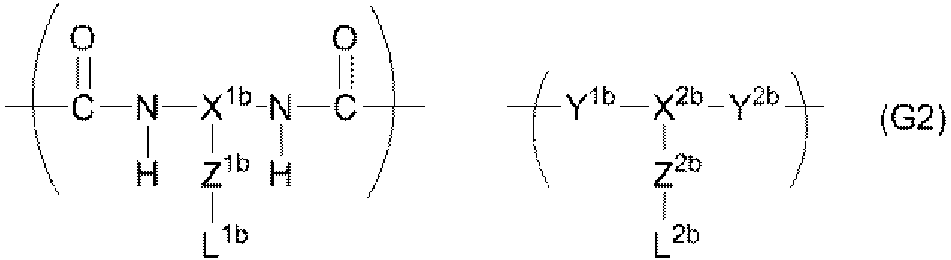 wherein, in Formulae (G1) and (G2), X^{1a}, X^{2a}, X^{1b} and X^{2b} each independently represent a residue obtained by removing three hydrogen atoms from a hydrocarbon having 2 to 16 carbon atoms; Z^{1a} and Z^{2b} each independently represent a single bond, or a divalent group selected from the group consisting of a sulfide bond (-S-), an ester bond (-COO- or -OCO-), an ether bond, and a urethane bond (-NHCOO- or -OCONH-); Z^{2a} and Z^{1b} each independently represent a single bond, or a divalent group selected from the group consisting of an alkylene group, an arylene group, a sulfide bond (-S-), an ester bond (-COO- or -OCO-), an ether bond, and a urethane bond (-NHCOO- or -OCONH-); Y^{1a}, Y^{2a}, Y^{1b} and Y^{2b} each independently represent -O- or -NR^{y}-, wherein R^{y} represents a hydrogen atom or an alkyl group; L^{1a} and L^{2b} each independently represent a hydrogen atom or an alkyl group having 2 to 16 carbon atoms; and L^{2a} and L^{1b} each independently represent a group including the Structure Gs.
<8> The ink composition according to any one of <1> to <7>, wherein the graft polymer is nonpolymerizable.
<9> The ink composition according to any one of <1> to <8>, further comprising a colorant.
<10> The ink composition according to any one of <1> to <9>, being for inkjet recording.
<11> An image forming method, comprising:
   an ink application process of applying the ink composition according to any one of <1> to <10> to a recording medium; and
   an irradiation process of irradiating the applied ink composition with an active energy ray.
<12> The image forming method according to <11>, wherein the ink application process comprises a process of applying the ink composition by an inkjet method.

### Advantageous Effects of Invention

According to the invention, an ink composition can be provided that is suitable for inkjet recording that provides an image with excellent adhesion property and excellent wet heat resistance.

### DESCRIPTION OF EMBODIMENTS

The ink composition of the invention includes:
a graft polymer having at least one selected from the group consisting of a urethane structure and a urea structure, and a graft side chain including the following Structure Gs;
a polymerizable compound; and
a polymerization initiator,
wherein the Structure Gs includes a structure having three or more repeating units, each of which is formed from an atomic group selected from the group consisting of a carbon atom, a hydrogen atom, an oxygen atom, a sulfur atom and a halogen atom, and in which an SP value of the repeating units is from 17 (MPa)^{1/2} to 20 (MPa)^{1/2}.

Hereinafter, each component is described in more detail. Further, in the present specification, a values before and after "to" or "-" in a range representes using "to" or "-" are included in that range as the minimum and maximum valueds. Further, in the present specification, the "graft polymer having a graft main chain having at least one selected from the group consisting of a urethane structure and a urea structure and a graft side chain including the following Structure Gs" may be referred to as the component A, the "polymerizable compound" may be referred to as the component B, and the "polymerization initiator" may be referred to as the component C.

With regard to content of a specific component described in the present specification, when there are plural materials corresponding to the specific component, it is intended to mean the total content of the corresponding plural materials.

### <Graft polymer>

(Component A) a graft polymer contained in the ink composition of the invention is a polymer having a graft main chain having at least one selected from the group consisting of a urethane structure and a urea structure, and a graft side chain including the Structure Gs (hereinafter, also referred to as the "polymer in the invention").

### (Graft main chain)

The polymer in the invention has, as a repeating unit of the graft main chain, at least one structure selected from the group consisting of a urethane structure (-NH-CO-O-) and a urea structure (-HN-CO-NR- (R represents a hydrogen atom, an alkyl group, or an aryl group)). The graft main chain in the invention preferably has both the urethane structure and the urea structure (that is, urethane urea structure).

The graft main chain in the invention preferably has a structure of the following Formula (A). In addition, the graft main chain in the invention may include plural kinds of the structure represented by the following Formula (A). The graft main chain may also include an additional structure in addition to the structure represented by the following Formula (A).

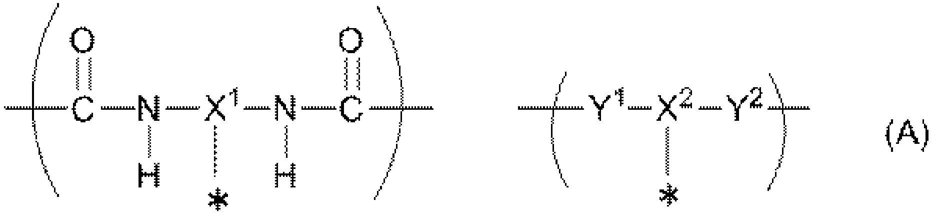

wherein X¹ and X² each independently represent a trivalent organic group, Y¹ and Y² each independently represent -O- or -NR^{y}-, and R^{y} represents a hydrogen atom or an alkyl group. * each independently represents a bonding site with the side chain.

X¹ represents a trivalent organic group and preferred examples thereof include a residue obtained by removing three hydrogen atoms from a hydrocarbon having 1 to 20 (preferably 2 to 16) carbon atoms. These organic groups may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

X² represents a trivalent organic group and preferred examples thereof include a residue obtained by removing three hydrogen atoms from a hydrocarbon having 1 to 20 (preferably 2 to 16) carbon atoms. These organic groups may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Y¹ and Y² each independently represent -O- or -NR^{y}-, and it is preferable that both Y¹ and Y² be -O-.

R^{y} represents a hydrogen atom or an alkyl group. R^{y} is preferably a hydrogen atom. When R^{y} is an alkyl group, the alkyl group preferably has 1 to 6 carbon atoms and more preferably 1 to 4 carbon atoms.

In Formula (A), examples of the side chain to which * is bound include a hydrogen atom, an alkyl group having 1 to 20 (preferably 2 to 16) carbon atoms, and a group containing the Structure Gs.

However, at least one of the side chains of Formula (A) is a group containing the Structure Gs.

In Formula (A), when the side chain to which * is bound is an alkyl group, a divalent group selected from the group consisting of a sulfide bond (-S-), an ester bond (-COO- or -OCO-), an ether bond, and a urethane bond (-NHCOO- or -OCONH-) may be present between the alkyl group and the graft main chain.

Further, the alkyl group may have a substituent group. Preferred examples of the substituent group which may be contained in the alkyl group include an alkoxy group having 1 to 8 carbon atoms, a hydroxyl group, a carboxyl group, a halogen atom (a fluorine atom, a chlorine atom, and an iodine atom, or the like), a cyano group, an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, an alkylcarbamoyl group having 2 to 7 carbon atoms, and an arylcarbamoyl group having 7 to 11 carbon atoms. More preferred examples include an alkoxy group having 1 to 8 carbon atoms, a hydroxyl group, a carboxyl group, a halogen atom, and a cyano group.

In Formula (A), when the side chain to which * is bound is a group containing the Structure Gs, a divalent group selected from the group consisting of an alkylene group, an arylene group, a sulfide bond (-S-), an ester bond (-COO- or -OCO-), an ether bond, and a urethane bond (-NHCOO- or -OCONH-) may be present between the group containing the Structure Gs and the graft main chain.

The alkylene group preferably has 1 to 10 carbon atoms, and more preferably has 1 to 6 carbon atoms. The alkylene group may have a linear structure, a branched structure, or a cyclic structure.

The arylene group preferably has 6 to 18 carbon atoms, and more preferably has 6 to 12 carbon atoms.

The graft polymer in the invention preferably includes at least one of the structures of the following Formula (A1) and (A2).

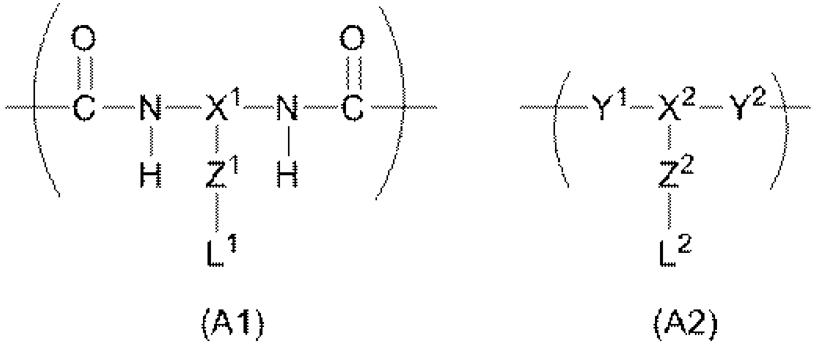

X¹ in Formula (A1) is the same as X¹ in Formula (A) (including the preferred range).

Z¹ in Formula (A1) represents a single bond or a divalent group selected from the group consisting of an alkylene group, an arylene group, a sulfide bond (-S-), an ester bond (-COO- or -OCO-), an ether bond, and a urethane bond (-NHCOO- or -OCONH-).

L¹ in Formula (A1) represents a group containing the Structure Gs.

Y¹ and Y² in Formula (A2) are the same as Y¹ and Y² in Formula (A) (including the preferred range), respectively. Further, when Y¹ or Y² is -NR^{y}-, R^{y} is the same as R^{y} in a case in which Y¹ or Y² is -NR^{y}- in Formula (A) (including the preferred range).

X² in Formula (A2) is the same as X² in Formula (A) (including the preferred range).

L² in Formula (A2) represents a group containing the Structure Gs.

Z² in Formula (A2) represents a single bond or a divalent group selected from the group consisting of an alkylene group, an arylene group, a sulfide bond (-S-), an ester bond (-COO- or -OCO-), an ether bond, and a urethane bond (-NHCOO- or -OCONH-).

Further, when Z¹ or Z² contains an alkylene group, the alkylene group preferably has 1 to 10 carbon atoms, and more preferably has 1 to 6 carbon atoms. The alkylene group may have a linear structure, a branched structure, or a cyclic structure.

Further, when Z¹ or Z² contains an arylene group, the arylene group preferably has 6 to 18 carbon atoms, and more preferably has 6 to 12 carbon atoms.

### (Graft side chain)

The graft polymer in the invention has at least one graft side chain including the following Structure Gs,
wherein the Structure Gs comprises a structure having three or more repeating units, each of which is formed from an atomic group selected from the group consisting of a carbon atom, a hydrogen atom, an oxygen atom, a sulfur atom and a halogen atom, and in which the SP value of the repeating units is from 17 (MPa)^{1/2} to 20 (MPa)^{1/2}.

Herein, it is enough that each of the three or more repeating units in the Structure Gs is formed from an atomic group selected from the group consisting of a carbon atom, a hydrogen atom, an oxygen atom, a sulfur atom and a halogen atom, and in which the SP value of the repeating units is from 17 (MPa)^{1/2} to 20 (MPa)^{1/2}. Each of the three or more repeating units may be present continuously or non-continuously (that is, may be present non-adjacently). Further, the graft side chain may contain an additional structure in addition to the Structure Gs.

The SP value is calculated based on OKITSU method described in Nippon Secchaku Gakkaishi (The Journal of The Adhesion Society of Japan), Vol. 29 (3), 1993, p 204-211. It is assumed that, when the repeating units in the graft side chain has SP value of from 17 (MPa)^{1/2} to 20 (MPa)^{1/2}, a polymer having a polarity close to the base is concentrated on an interface to improve the adhesion property or the like.

The SP value is preferably from 17 (MPa)^{1/2} to 19 (MPa)^{1/2} and more preferably from 17 (MPa)^{1/2} to 18 (MPa)^{1/2}.

Each of the three or more repeating units in the Structure Gs preferably has a polyethylene structure, a polypropylene structure, a poly(meth)acrylic acid ester structure, a polyester structure, or a polystyrene structure. More preferably, each of the three or more repeating units in the Structure Gs has a polyethylene structure, a poly(meth)acrylic acid ester structure, a polyester structure, or a polystyrene structure, and particularly preferably has a polyethylene structure, a poly(meth)acrylic acid ester structure, or a polyester structure.

The polyethylene structure is preferably a structure of the following Formula (S1). Further, a hydrogen atom in Formula (S1) may be substituted with a halogen atom.

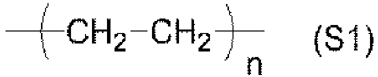

In the Formula (S1), n represents an integer of 3 or more. n is preferably an integer of from 3 to 100, more preferably an integer of from 3 to 50, and particularly preferably an integer of from 3 to 20.

The polypropylene structure is preferably a structure of the following Formula (S2). Further, the hydrogen atom in Formula (S2) may be substituted with a halogen atom.

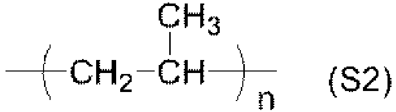

In Formula (S2), n represents an integer of 3 or more. n is preferably an integer of from 3 to 100, more preferably an integer of from 3 to 50, and particularly preferably an integer of from 3 to 20.

The poly(meth)acrylic acid ester structure is preferably a structure of the following Formula (S3).

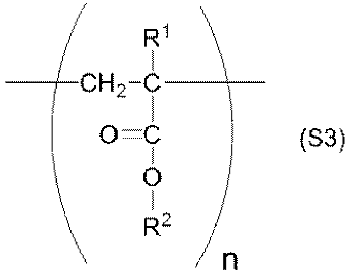

In Formula (S3), R¹ represents a hydrogen atom or a methyl group, R² represents an alkyl group or an aryl group, and n represents an integer of 3 or more.

R¹ is preferably a methyl group.

When R² is an alkyl group, examples of the alkyl group include a methyl group, an ethyl group, an n-propyl group, an isopropyl group, an n-butyl group, an isobutyl group, a sec-butyl group, a tert-butyl group, a n-pentyl group, an isopentyl group, a neopentyl group, a 1-methylpropyl group, a n-hexyl group, an isohexyl group, a 1,1-dimethylbutyl group, a 2,2-dimethylbutyl group, a 3,3-dimethylbutyl group, a 3,3-dimethylpropyl group, a 2-ethylbutyl group, an n-heptyl group, a 1-methylheptyl group, a 1-ethylhexyl group, an n-octyl group, a 1-methylheptyl group, and a nonyl group. The carbon atom number is preferably from 1 to 20, and more preferably from 2 to 12. Further, the alkyl group may be substituted with an aryl group having 6 to 20 carbon atoms, an alkoxy group having 1 to 8 carbon atoms, a hydroxyl group, a carboxyl group, a halogen atom (a fluorine atom, a chlorine atom, and an iodine atom, or the like), an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, or the like.

When R² is an aryl group, examples of the aryl group include a phenyl group, a naphthyl group, and a biphenyl group. The carbon atom number is preferably from 6 to 20, and more preferably from 6 to 18. Further, the aryl group may be substituted with an alkyl group having 1 to 10 carbon atoms, an alkoxy group having 1 to 8 carbon atoms, a hydroxyl group, a carboxyl group, a halogen atom (a fluorine atom, a chlorine atom, and an iodine atom, or the like), an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, or the like.

n represents an integer of 3 or more. n is preferably an integer of from 3 to 100, more preferably an integer of from 3 to 50, and particularly preferably an integer of from 3 to 20.

The polyester structure is preferably a structure of the following Formula (S4).

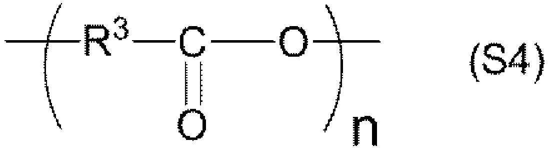

In Formula (S4), R³ represents an alkylene group or an arylene group and n represents an integer of 3 or more.

When R³ is an alkylene group, examples of the alkylene group include a methylene group, an ethylene group, a propylene group, a hexylene group, and a cyclohexylene group. The carbon atom number is preferably from 3 to 12, and more preferably from 3 to 8. Further, the alkylene group may be substituted with an aryl group having 6 to 20 carbon atoms, an alkoxy group having 1 to 8 carbon atoms, a hydroxyl group, a carboxyl group, a halogen atom (a fluorine atom, a chlorine atom, and an iodine atom, or the like), an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, or the like.

When R³ is an arylene group, examples of the arylene group include a phenylene group and a naphthylene group. The carbon atom number is preferably from 6 to 18, and more preferably from 6 to 12. Further, the arylene group may be substituted with an alkyl group having 1 to 10 carbon atoms, an alkoxy group having 1 to 8 carbon atoms, a hydroxyl group, a carboxyl group, a halogen atom (a fluorine atom, a chlorine atom, and an iodine atom, or the like), an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, or the like.

n represents an integer of 3 or more. n is preferably an integer of from 3 to 100, more preferably an integer of from 3 to 50, and particularly preferably an integer of from 3 to 20.

The polystyrene structure is preferably a structure of the following Formula (S5). Further, a hydrogen atom in Formula (S5) may be substituted with a halogen atom.

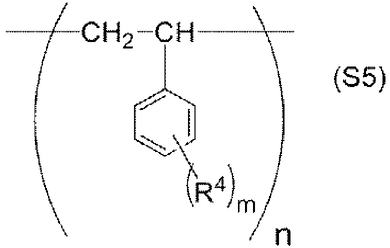

In Formula (S5), R⁴ represents an alkyl group, an alkoxy group, or a halogen atom, m represents an integer of from 0 to 5, and n represents an integer of 3 or more. When plural R⁴ are present, they may be the same as or different from each other.

When R⁴ is an alkyl group, examples of the alkyl group include a methyl group, an ethyl group, an n-propyl group, an isopropyl group, an n-butyl group, an isobutyl group, a sec-butyl group, a tert-butyl group, a n-pentyl group, an isopentyl group, a neopentyl group, a 1-methylpropyl group, an n-hexyl group, an isohexyl group, a 1,1-dimethylbutyl group, a 2,2-dimethylbutyl group, a 3,3-dimethylbutyl group, a 3,3-dimethylpropyl group, a 2-ethylbutyl group, a n-heptyl group, a 1-methylheptyl group, a 1-ethylhexyl group, an n-octyl group, a 1-methylheptyl group, and a nonyl group. The carbon atom number is preferably from 1 to 10, and more preferably from 1 to 6. Further, the alkyl group may be substituted with an aryl group having 6 to 20 carbon atoms, an alkoxy group having 1 to 8 carbon atoms, a hydroxyl group, a carboxyl group, a halogen atom (a fluorine atom, a chlorine atom, and an iodine atom, or the like), an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, or the like.

When R⁴ is an alkoxy group, examples of the alkoxy group include a methoxy group, an ethoxy group, a propoxy group, an isopropoxy group, a butoxy group, an isobutoxy group, a sec-butoxy group, a tert-butoxy group, a pentoxy group, and a hexyloxy group. The carbon atom number is preferably from 1 to 10, and more preferably from 1 to 6. Further, the alkoxy group may be substituted with an alkyl group having 1 to 10 carbon atoms, an aryl group having 6 to 20 carbon atoms, a hydroxyl group, a carboxyl group, a halogen atom (a fluorine atom, a chlorine atom, and an iodine atom, or the like), an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, or the like.

When R⁴ is a halogen atom, examples of the halogen atom include a fluorine atom, a chlorine atom, a bromine atom, and an iodine atom, and a fluorine atom or a chlorine atom is preferable.

n represents an integer of 3 or more. n is preferably an integer of from 3 to 100, more preferably an integer of from 3 to 50, and particularly preferably an integer of from 3 to 20.

Carbon atom number of the graft side chain in the invention is preferably 6 or more, more preferably from 8 to 1000, and particularly preferably from 10 to 800, from the viewpoints of the ink solubility and wet heat resistance, or the like.

### (Method for synthesizing graft polymer)

The graft polymer in the invention can be synthesized by a method of reacting a single-terminal diol polymer or a single-terminal diamino polymer with diisocyanate, a method of reacting a single-terminal diisocyanate polymer with diol or diamine, or the like. As described herein, the single-terminal diol polymer means a polymer having two hydroxyl groups only at one terminal of the main chain of the polymer and the single-terminal diamino polymer means a polymer having two amino groups only at one terminal of the main chain of the polymer.

Synthesis of the single-terminal diol polymer may be performed by various methods including a living anion polymerization termination, a living cation polymerization termination, a radical polymerization chain transfer, and a living radical polymerization followed by a terminal functionalization. A reference can be made to the method described in "Reactive polymer and application development thereof (Toray Research Center)" pages 8 to 47 and pages 68 to 77.

Further, the single-terminal diisocyanate polymer may be synthesized by reacting a polymer having an active hydrogen at one terminal with polyfunctional isocyanate.

The graft polymer in the invention is preferably a graft polymer that is obtained by (First method) a method of reacting the following (a1) and (a2):
(a1) a diisocyanate compound; and
(a2) a compound having the Structure Gs and two of at least either a hydroxyl group or an amino group.

The graft polymer in the invention is also preferably a graft polymer that is obtained by (Second method) a method of reacting the following (a3) and (a4):
(a3) a diisocyanate compound having the Structure Gs; and
(a4) a compound having two of at least either a hydroxyl group or an amino group.

The graft polymer in the invention is particularly preferably a graft polymer that is obtained by the First method.

Hereinbelow, the First method and the Second method are explained.

### -First method-

Hereinafter, the (a1) used in the First method is described.

The (a1) is used either singly or in combination of two or more types, and it may be used without any limitation as long as it is a bifunctional isocyanate compound.

The (a1) diisocyanate compound is preferably the following Formula (DI-1).

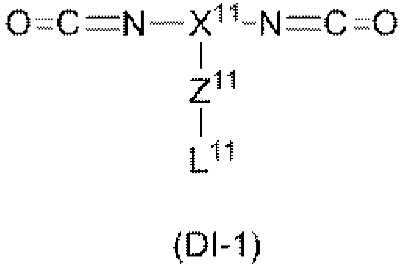

In Formula (DI-1), X¹¹ represents a residue obtained by removing three hydrogen atoms from a hydrocarbon having 2 to 16 carbon atoms. The hydrocarbon may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Z¹¹ represents a single bond or a divalent group selected from the group consisting of a sulfide bond (-S-), an ester bond (-COO- or -OCO-), an ether bond, and a urethane bond (-NHCOO- or -OCONH-).

L¹¹ represents a hydrogen atom or an alkyl group having 2 to 16 carbon atoms. L¹¹ is preferably a hydrogen atom.

Any known diisocyanate compound may be used as the (a1) diisocyanate compound. Specific examples thereof include aromatic diisocyanate such as 4,4'-diphenylmethane diisocyanate (MDI), 2,4- or 2,6-tolylene diisocyanate (TDI), m- or p-phenylene diisocyanate, 1,3- or 1,4-xylylene diisocyanate (XDI), 1,5-naphthalene diisocyanate (NDI), and 3,3'-dimethyl-4,4'-biphenylene diisocyanate (TODI), and aliphatic diisocyanate such as hexamethylene diisocyanate (HDI), hydrogenated MDI (H12MDI), and isophorone diisocyanate (IPDI). A prepolymer type, a nurate type, a urea type-carbodiimide type modified product, and the like of diisocyanates are also preferable. Two or more kinds of the diisocyanate or modified type may be mixed and used.

Further, a compound having the following structure may be also used as a diisocyanate compound.

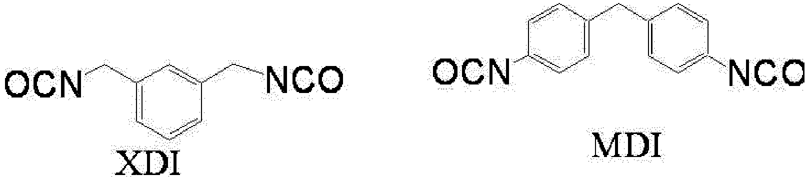

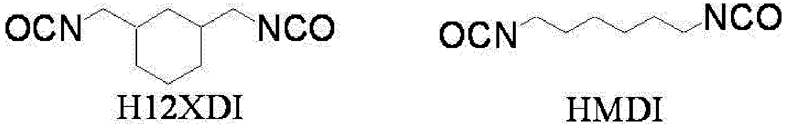

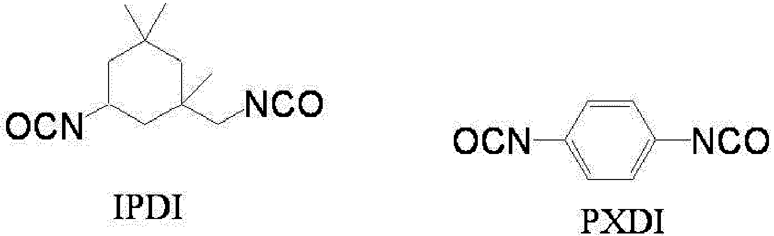

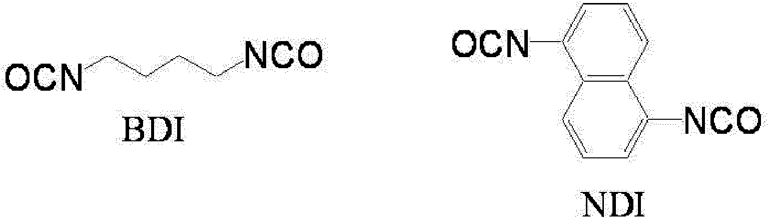

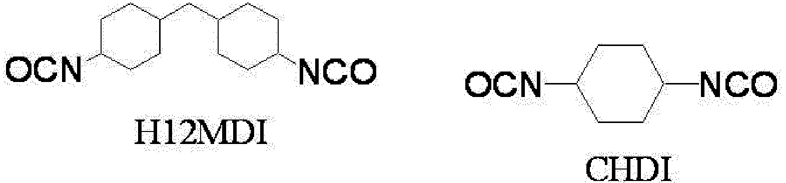

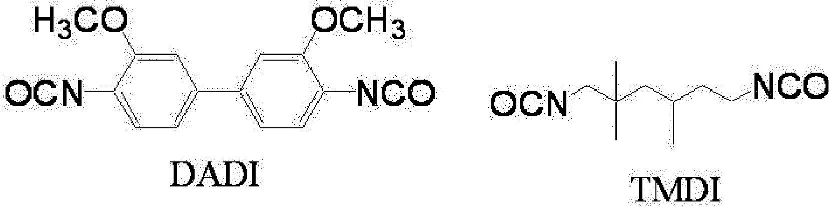

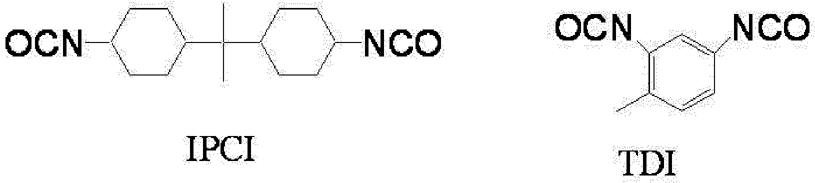

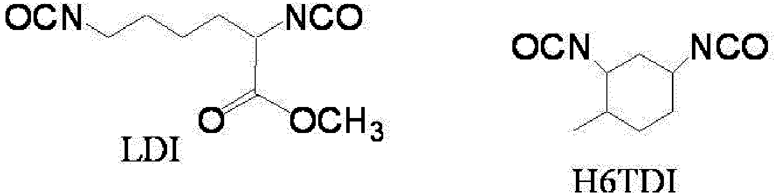

Hereinafter, the (a2) used in the First method in the invention is described.

The (a2) is used either singly or in combination of two or more types.

The (a2) can be easily synthesized by, for example, radical polymerization of corresponding monomer using, as a chain transfer agent, a thiol having two of at least either a hydroxyl group or an amino group.

Examples of the chain transfer agent which is preferably used in the invention include 1-thioglycerol and 1,4-dithioerythritol.

The (a2) that is usable in the invention can be easily obtained by polymerization of a monomer formed from an atomic group selected from the group consisting of a carbon atom, a hydrogen atom, an oxygen atom, a sulfur atom and a halogen atom in the presence of the chain transfer agent described above. As for the monomer formed from an atomic group selected from the group consisting of a carbon atom, a hydrogen atom, an oxygen atom, a sulfur atom and a halogen atom, a common monomer having radical polymerizable unsaturated double bond may be used, and examples thereof include (meth)acrylate, methyl (meth)acrylate, and styrene, but the invention is not limited to these. In addition, the ring-opening polymerizable monomer such as ε-caprolactone, γ-butryolactone, ethylene oxide, propylene oxide, an oxetane compound, and tetrahydrofuran can be synthesized by ring-opening polymerization, and after polymer synthesis, modification of a terminal group can be performed by a known reaction (for example, a reaction of using the living ion polymerization method described in "Reactive polymer and application development thereof", pages 8 to 20 and pages 68 to 77.) A macromonomer of a single-terminal diol can be also synthesized from a polyolefin such as polyethylene and polypropylene by using the same reaction.

The (a2) is preferably the following Formula (DO-1).

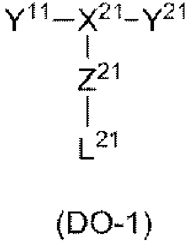

In Formula (DO-1), Y¹¹ and Y²¹ each independently represent -OH or -NHR^{y}. R^{y} represents a hydrogen atom or an alkyl group. R^{y} is preferably a hydrogen atom. When R^{y} is an alkyl group, carbon atom number of the alkyl group is preferably from 1 to 6, and more preferably from 1 to 4. It is preferable that both Y¹¹ and Y²¹ be -OH.

X²¹ represents a residue obtained by removing three hydrogen atoms from a hydrocarbon having 2 to 16 carbon atoms. The hydrocarbon may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Z²¹ represents a single bond or a divalent group selected from the group consisting of an alkylene group, an arylene group, a sulfide bond (-S-), an ester bond (-COO- or -OCO-), an ether bond, and a urethane bond (-NHCOO- or -OCONH-).

Further, when Z²¹ contains an alkylene group, carbon atom number of the alkylene group is preferably from 1 to 10, and more preferably from 1 to 6. Further, the alkylene group may have a linear structure, a branched structure, or a cyclic structure.

When Z²¹ contains an arylene group, the arylene group preferably has 6 to 18 carbon atoms, and more preferably from 6 to 12 carbon atoms.

L²¹ represents a group containing the Structure Gs.

Specific examples of the (a2) include those described below, but the invention is not limited to these. In addition, n in the compounds represents an integer of 3 or more.

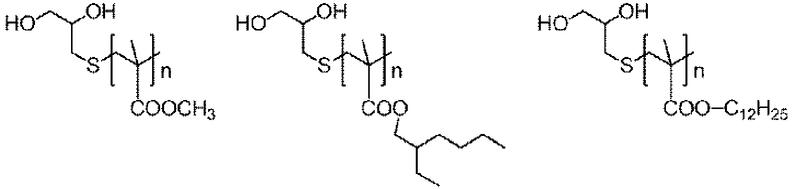

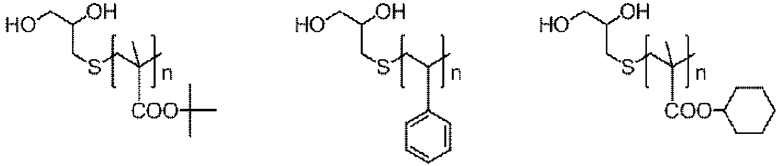

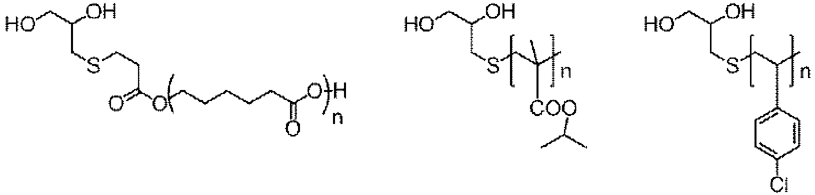

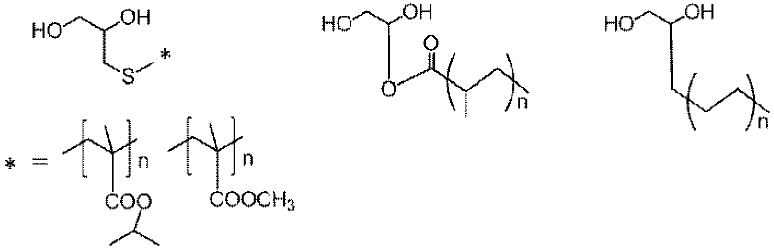

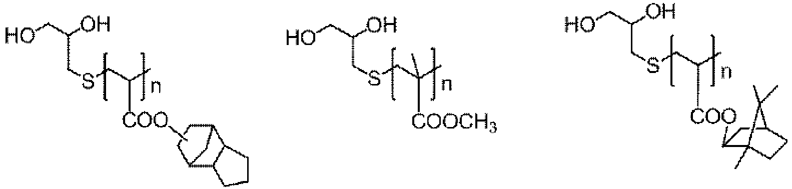

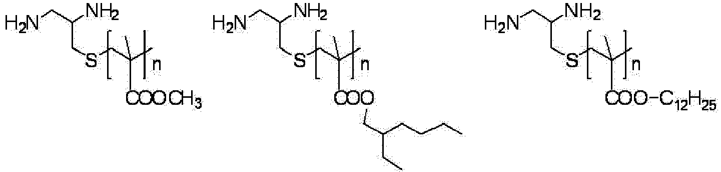

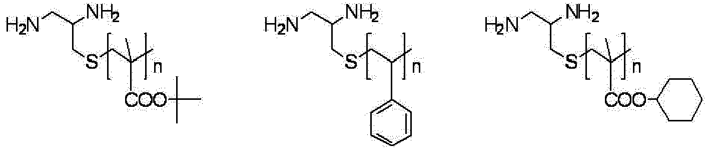

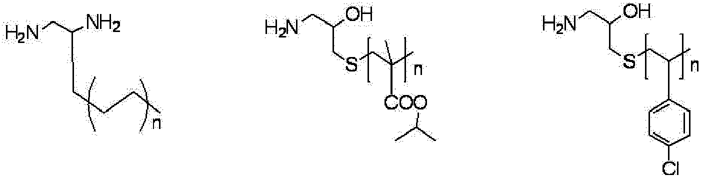

When the (a1) and the (a2) are reacted to synthesize the graft polymer in the invention, a ratio between the (a1) and the (a2) ((a1) : (a2)) is ,preferably 1 : 1 to 1 : 200 and more preferably 1 : 1 to 1 : 100, in terms of mass ratio.

The graft polymer synthesized by the First method is preferably a polymer represented by the following Formula (G1).

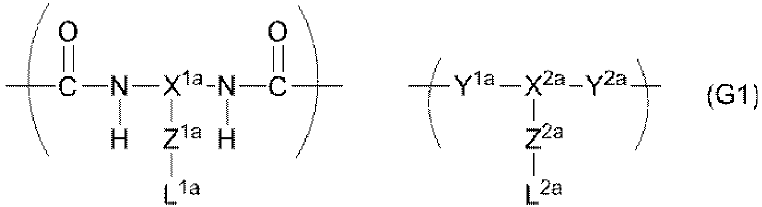

In Formula (G1), X^{1a} and X^{2a} each independently represent a residue obtained by removing three hydrogen atoms from a hydrocarbon having 2 to 16 carbon atoms. The hydrocarbon may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Z^{1a} represents a single bond or a divalent group selected from the group consisting of a sulfide bond (-S-), an ester bond (-COO- or -OCO-), an ether bond, and a urethane bond (-NHCOO- or -OCONH-).

Z^{2a} represents a single bond or a divalent group selected from the group consisting of an alkylene group, an arylene group, a sulfide bond (-S-), an ester bond (-COO- or -OCO-), an ether bond, and a urethane bond (-NHCOO- or -OCONH-). Further, when Z^{2a} contains an alkylene group, carbon atom number of the alkylene group is preferably from 1 to 10, and more preferably from 1 to 6. The alkylene group may have a linear structure, a branched structure, or a cyclic structure. When Z^{2a} contains an arylene group, carbon atom number of the arylene group is preferably from 6 to 18, and more preferably from 6 to 12.

Y^{1a} and Y^{2a} each independently represent -O- or -NR^{Y}-. R^{y} represents a hydrogen atom or an alkyl group. R^{y} is preferably a hydrogen atom. When R^{y} is an alkyl group, the alkyl group preferably has 1 to 6 carbon atoms, and more preferably has 1 to 4 carbon atoms. It is preferable that both Y^{1a} and Y^{2a} be -O-.

L^{1a} represents a hydrogen atom or an alkyl group having 2 to 16 carbon atoms. L^{1a} is preferably a hydrogen atom.

L^{2a} represents a group containing the Structure Gs.

Specific examples of the graft polymer that is synthesized by the First method include those described below, but the invention is not limited to these. In addition, n in the compounds represents an integer of 3 or more.

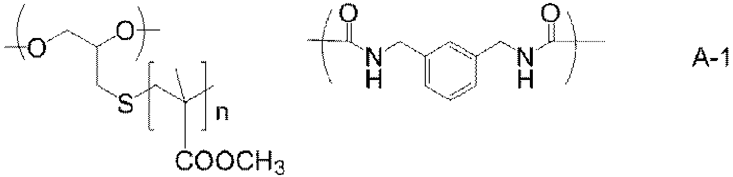

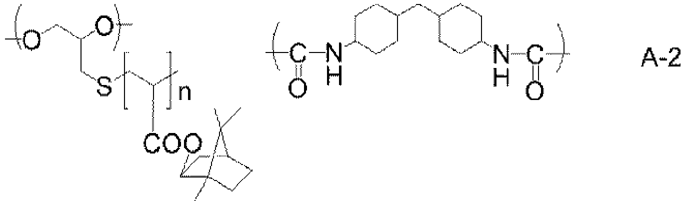

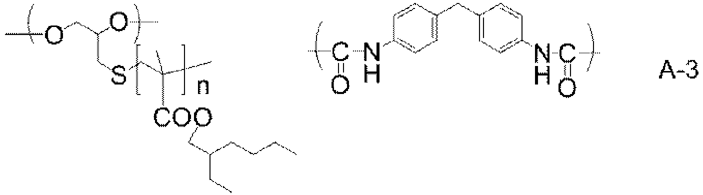

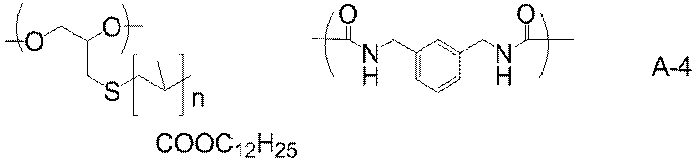

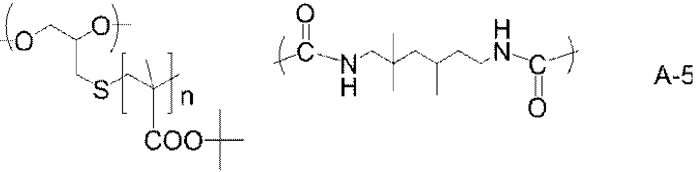

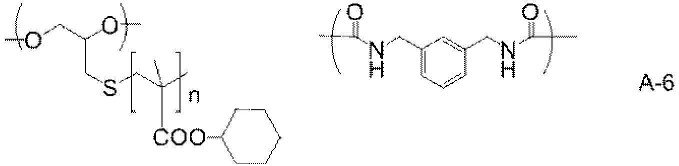

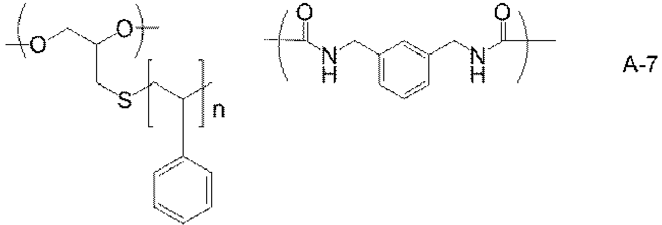

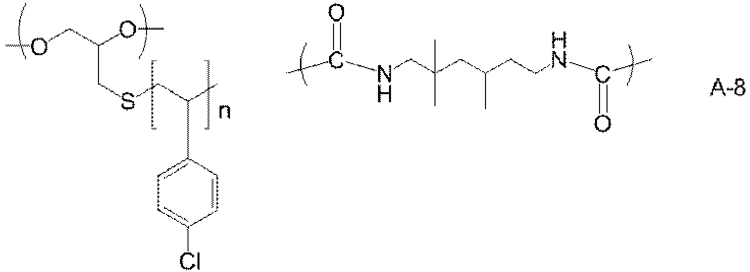

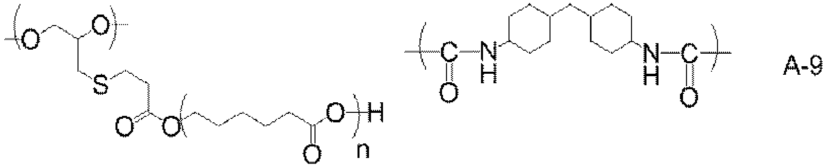

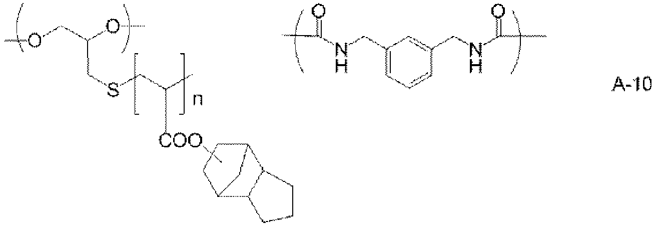

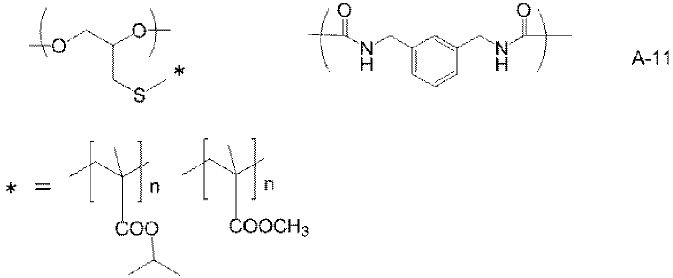

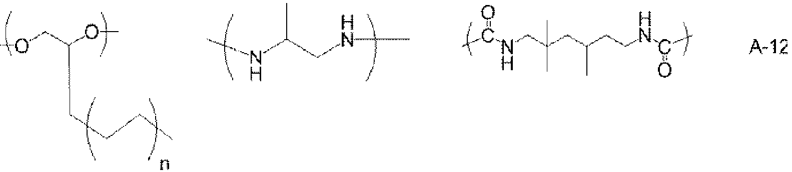

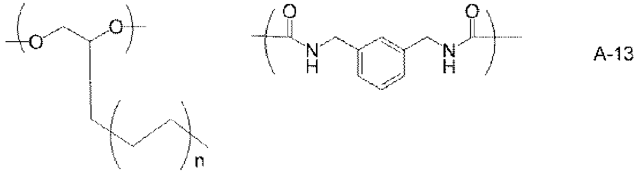

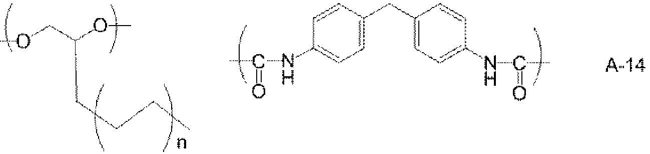

### -Second method-

The graft polymer in the invention may be also obtained by reacting the following (a3) and (a4):
(a3) a diisocyanate compound having the Structure Gs; and
(a4) a compound having two of at least either a hydroxyl group or an amino group.

Hereinafter, the (a3) used in the Second method is described.

The (a3) is used either singly or in combination of two or more types.

The (a3) can be synthesized by a method of reacting a polymer having an active hydrogen at one terminal with polyfunctional isocyanate, or the like.

The (a3) is preferably the following Formula (DI-2).

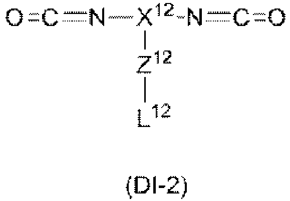

In Formula (DI-2), X¹² represents a residue obtained by removing three hydrogen atoms from a hydrocarbon having 2 to 16 carbon atoms. The hydrocarbon may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Z¹² represents a single bond or a divalent group selected from the group consisting of an alkylene group, an arylene group, a sulfide bond (-S-), an ester bond (-COO- or -OCO-), an ether bond, and a urethane bond (-NHCOO- or -OCONH-). Further, when Z¹² contains an alkylene group, carbon atom number of the alkylene group is preferably from 1 to 10, and more preferably from 1 to 6. The alkylene group may have a linear structure, a branched structure, or a cyclic structure. When Z¹² contains an arylene group, carbon atom number of the arylene group is preferably 6 to 18, and more preferably from 6 to 12.

L¹² represents a group containing the Structure Gs.

Specific examples of the (a3) include those described below, but the invention is not limited to these. In addition, n in the formula represents an integer of 3 or more. n is preferably an integer of from 3 to 100, more preferably an integer of from 3 to 50, and particularly preferably an integer of from 3 to 20.

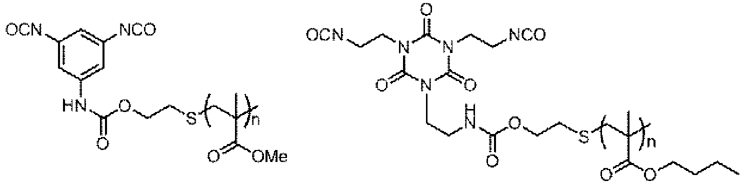

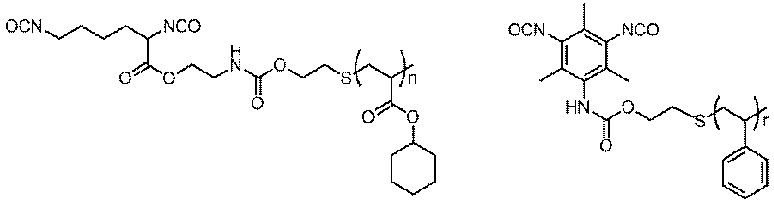

Hereinafter, the (a4) used in the Second method is described.

The (a4) is not limited as long as it is a compound having two of at least either a hydroxyl group or an amino group, and it may be used either singly or in combination of two or more types.

The (a4) is preferably the following Formula (DO-2).

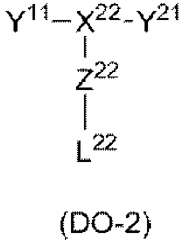

In Formula (DO-2), Y¹¹ and Y²¹ each independently represent -OH or -NHR^{y}. R^{y} represents a hydrogen atom or an alkyl group. R^{y} is preferably a hydrogen atom. When R^{y} is an alkyl group, carbon atom number of the alkyl group is preferably from 1 to 6, and more preferably from 1 to 4. It is preferable that both Y¹¹ and Y²¹ be -OH.

X²² represents a residue obtained by removing three hydrogen atoms from a hydrocarbon having 2 to 16 carbon atoms. The hydrocarbon may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Z²² represents a single bond or a divalent group selected from the group consisting of a sulfide bond (-S-), an ester bond (-COO- or -OCO-), an ether bond, and a urethane bond (-NHCOO- or -OCONH-).

L²² represents a hydrogen atom or an alkyl group having 2 to 16 carbon atoms. L²² is preferably a hydrogen atom.

Specific examples of the (a4) include those described below, but the invention is not limited to these.

Aliphatic diamine compounds such as ethylene diamine, propylene diamine, tetramethylene diamine, pentamethylene diamine, hexamethylene diamine, heptamethylene diamine, octamethylene diamine, dodecamethylene diamine, propane-1,2-diamine, bis(3-aminopropyl)methylamine, 1,3-bis(3-aminopropyl)tetramethyl siloxane, piperazine, 2,5-dimethylpiperazine, N-(2-aminoethyl)piperazine, 4-amino-2,2-6,6-tetramethylpiperidine, N,N-dimethylethylene diamine, lysine, L-cystine, and isophorone diamine;
aromatic diamine compounds such as o-phenylene diamine, m-phenylene diamine, p-phenylene diamine, 2,4-tolylene diamine, benzidine, o-ditoluidine, o-dianisidine, 4-nitro-m-phenylene diamine, 2,5-dimethoxy-p-phenylene diamine, bis-(4-aminophenyl)sulfone, 4-carboxy-o-phenylene diamine, 3-carboxy-m-phenylene diamine, 4,4'-diaminophenyl ether, and 1,8-naphthalene diamine;
heterocyclic amine compounds such as 2-aminoimidazole, 3-aminotriazole, 5-amino-1H-tetrazole, 4-aminopyrazole, 2-aminobenzimidazole, 2-amino-5-carboxy-triazole, 2,4-diamino-6-methyl-S-triazine, 2,6-diaminopyridine, L-histidine, DL-tryptophane, and adenine;
aminoalcohol or aminophenol compounds such as ethanolamine, N-methylethanolamine, N-ethylethanolamine, 1-amino-2-propanol, 1-amino-3-propanol, 2-aminoethoxyethanol, 2-aminothioethoxyethanol, 2-amino-2-methyl-1-propanol, p-aminophenol, m-aminophenol, o-aminophenol, 4-methyl-2-aminophenol, 2-chloro-4-aminophenol, 4-methoxy-3-aminophenol, 4-hydroxybenzylamine, 4-amino-1-naphthol, 4-aminosalicylic acid, 4-hydroxy-N-phenylglycine, 2-aminobenzyl alcohol, 4-aminophenethyl alcohol, 2-carboxy-5-amino-1-naphthol, and L-tyrosine;
polycarbonate diols such as UH-CARB, UN-CARB, UD-CARB, UC-CARB, and UC-CARB manufactured by Ube Industries, Ltd., PLACCEL CD-PL and PLACCEL CD-H manufactured by Daicel Corporation, and PNOC manufactured by KURARAY CO., LTD;
polyether diols such as diethylene glycol, triethylene glycol, tetraethylene glycol, pentaethylene glycol, hexaethylene glycol, heptaethylene glycol, octaethylene glycol, di-1,2-propylene glycol, tri-1,2-propylene glycol, tetra-1,2-propylene glycol, hexa-1,2-propylene glycol, di-1,3-propylene glycol, tri-1,3-propylene glycol, tetra-1,3-propylene glycol, di-1,3-butylene glycol, tri-1,3-butylene glycol, hexa-1,3-butylene glycol; polyethylene glycol, polyethylene glycol, polyethylene glycol, polyethylene glycol, polyethylene glycol, polypropylene glycol, polypropylene glycol, polypropylene glycol, polypropylene glycol, polypropylene glycol, and polypropylene glycol, each of which preferably has number average molecular weight of 300 to 10000 (more preferably 300 to 5000); PTMG650, PTMG1000, PTMG2000, and PTMG3000 (product name) manufactured by Sanyo Chemical Industries, Ltd., NEWPOL PE-61, NEWPOL PE-62, NEWPOL PE-64, NEWPOL PE-68, NEWPOL PE-71, NEWPOL PE-74, NEWPOL PE-75, NEWPOL PE-78, NEWPOL PE-108, and NEWPOL PE-128 (product name) manufactured by Sanyo Chemical Industries, Ltd., NEWPOL BPE-20, NEWPOL BPE-20F, NEWPOL BPE-20NK, NEWPOL BPE-20T, NEWPOL BPE-20G, NEWPOL BPE-40, NEWPOL BPE-60, NEWPOL BPE-100, NEWPOL BPE-180, NEWPOL BPE-2P, NEWPOL BPE-23P, NEWPOL BPE-3P, and NEWPOL BPE-5P (product name) manufactured by Sanyo Chemical Industries, Ltd.;
polyester diols such as PLACCEL series (PLACCEL205 and PLACCEL220 (polycaprolactonediol)) manufactured by Daicel Corporation, DURANOL series (T3000 series, T4000 series, T5000 series, and T6000 series) manufactured by Asahi Kasei Chemicals Corporation, and ETERNACOLL (UH, UHC, UC, UM series) manufactured by Ube Industries, Ltd.; and
other diol compounds such as alkylene diol and the like that are generally used for synthesizing polyurethane.

When the (a3) and the (a4) are reacted to synthesize the graft polymer in the invention, a ratio between the (a3) and the (a4) ((a3) : (a4)) is preferably 1 : 1 to 200 : 1, and more preferably 1 : 1 to 100 :1, in terms of mass ratio.

The graft polymer synthesized by the Second method is preferably a polymer represented by the following Formula (G2).

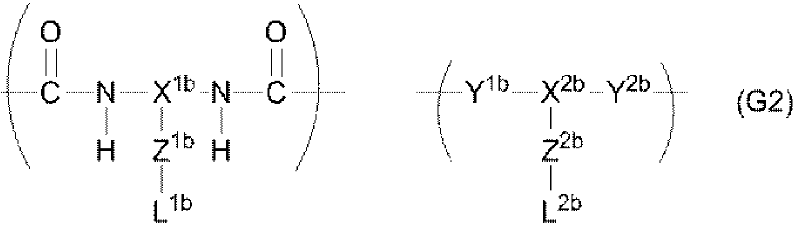

In Formula (G2), X^{1b} and X^{2b} each independently represent a residue obtained by removing three hydrogen atoms from a hydrocarbon having 2 to 16 carbon atoms. The hydrocarbon may have a linear structure, a branched structure, or a cyclic structure, or may have an unsaturated bond. Further, a heteroatom (for example, a nitrogen atom, an oxygen atom, a sulfur atom, or the like) may be contained in the hydrocarbon.

Z^{1b} represents a single bond or a divalent group selected from the group consisting of an alkylene group, an arylene group, a sulfide bond (-S-), an ester bond (-COO- or -OCO-), an ether bond, and a urethane bond (-NHCOO- or -OCONH-). Further, when Z^{1b} contains an alkylene group, carbon atom number of the alkylene group is preferably from 1 to 10, and more preferably from 1 to 6. The alkylene group may have a linear structure, a branched structure, or a cyclic structure. When Z^{1b} contains an arylene group, carbon atom number of the arylene group is preferably from 6 to 18, and more preferably from 6 to 12.

Z^{2b} represents a single bond or a divalent group selected from the group consisting of a sulfide bond (-S-), an ester bond (-COO- or -OCO-), an ether bond, and a urethane bond (-NHCOO- or -OCONH-).

Y^{1b} and Y^{2b} each independently represent -O- or -NR^{y}-. R^{y} represents a hydrogen atom or an alkyl group. R^{y} is preferably a hydrogen atom. When R^{y} is an alkyl group, the alkyl group preferably has 1 to 6 carbon atoms, and more preferably has 1 to 4 carbon atoms. It is preferable that both Y^{1b} and Y^{2b} be -O-.

L^{1b} represents a group containing the Structure Gs.

L^{2b} represents a hydrogen atom or an alkyl group having 2 to 16 carbon atoms. L^{2b} is preferably a hydrogen atom.

Specific examples of the graft polymer synthesized by the Second method include those described below, but the invention is not limited to these. In addition, n in the compounds represents an integer of 3 or more.

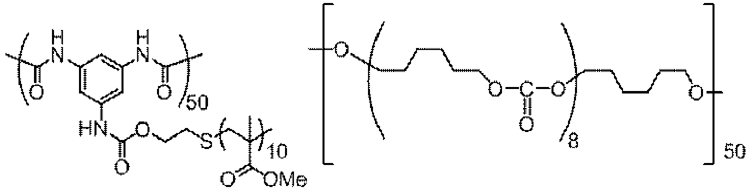

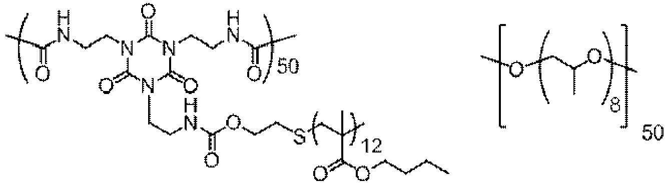

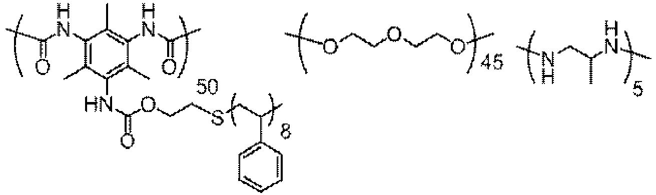

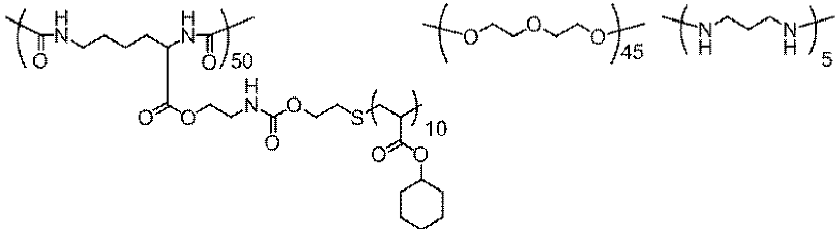

The number average molecular weight of the graft polymer in the invention is preferably from 3,000 to 200,000, more preferably from 3,000 to 100,000, and still more preferably from 3,000 to 50,000.

The number weight average molecular weight is measured by gel permeation chromatography (GPC). In GPC, for example, HLC-8020GPC (manufactured by Tosoh Corporation) is used, TSKgel SuperHZM-H, TSKgel SuperHZ4000, or TSKgel SuperHZ200 (manufactured by Tosoh Corporation, 4.6 mm ID x 15 cm) is used as a column, and THF (tetrahydrofuran) is used as elution liquid.

The amount of the (component A) graft polymer added in the ink composition of the invention is preferably from 0.1% by mass to 20% by mass, more preferably from 0.5% by mass to 15% by mass, and particularly preferably, from 1% by mass to 10% by mass, with respect to the ink composition.

In the ink composition of the invention, the (component A) graft polymer may be used either singly or in combination of two or more types. In addition, a commercially available urethane acrylate may be used in combination.

Although the reason for obtaining effects in adhesion property, heat resistance, and the like by using the graft polymer in the invention and having an amount of the monofunctional polymerizable compound added in the polymerizable compound that is used in the ink composition of 50% by mass or more is unclear, the inventors of the invention assume as follows.

When the graft polymer in the invention has a graft side chain containing the Structure Gs, a hydrophobic graft polymer is dispersed in a preferred state in the ink composition instead of having an interaction with a pigment or the like in the ink composition, and at the time of curing, the hydrophobic graft polymer is concentrated on a surface, an interface, or the like of an ink film whereby the mechanical strength and heat strength on the surface and interface of the ink film at microlevel that is likely to have an effect on the entire coating film are improved by high aggregation force based on a hydrogen bond of polyurethane, and as a result of which, the effects such as improved adhesion property, heat resistance, and the like are obtained. However, the invention is not limited to these.

### <Polymerizable compound>

The ink composition of the invention includes a polymerizable compound and a monofunctional polymerizable compound is contained in an amount of 50% by mass or more in the polymerizable compound (in the present specification, the "monofunctional polymerizable compound" may be referred to as component b1).

According to the invention, in the (component B) polymerizable compound, the (component b1) monofunctional polymerizable compound is preferably contained in an amount of from 50% by mass to 100% by mass, more preferably contained in an amount of from 80% by mass to 100% by mass, and still more preferably contained in an amount of from 95% by mass to 100% by mass

The polymerizable compound used in the invention is not limited as long as it is a compound having a polymerizable unsaturated bond. However, a polymerizable monomer having a radical polymerizable ethylenically unsaturated bond is preferable. The polymerizable compound may be used either singly or in combination of two or more types.

Examples of the polymerizable monomer having a radical polymerizable ethylenically unsaturated bond include nitrogen-containing radical polymerizable compounds such as N-vinyl compounds, acrylamide, and methacrylamides; unsaturated carboxylic acid such as acrylic acid, methacrylic acid, itaconic acid, crotonic acid, isocrotonic acid, and maleic acid, unsaturated carboxylic acid ester, and salts thereof; anhydrides having an ethylenically unsaturated group; acrylonitrile; and styrene. Further examples thereof include macromonomers such as various unsaturated polyesters, unsaturated polyethers, unsaturated polyamides, and unsaturated polyurethanes.

Examples of the (component b1) monofunctional polymerizable compound in the invention include:
N-vinyl compounds such as N-vinyl lactams and N-vinyl formamide;
amide compounds such as acrylamide, N-methylol acrylamide, diacetone acrylamide, N,N-dimethyl acrylamide, N,N-diethyl acrylamide, N-isopropyl acrylamide, acryloylmorpholine, methacrylamide, N-methylol methacrylamide, diacetone methacrylamide, N,N-dimethyl methacrylamide, N,N-diethyl methacrylamide, N-isopropyl methacrylamide, and methacryloyl morpholine;
acrylate compounds such as 2-hydroxyethyl acrylate, butoxyethyl acrylate, carbitol acrylate, cyclohexyl acrylate, tetrahydrofurfuryl acrylate, benzyl acrylate, tridecyl acrylate, 2-phenoxyethyl acrylate, N-methylol acrylamide, diacetone acrylamide, epoxyacrylate, isobornyl acrylate, dicyclopentenyl acrylate, dicyclopentenyloxyethyl acrylate, dicyclopentanyl acrylate, 2-hydroxy-3-phenoxypropyl acrylate, 2-acryloyloxyethylphthalic acid, methoxy-polyethylene glycol acrylate, 2-acryloyloxyethyl-2-hydroxyethylphthalic acid, cyclic trimethylol propane formal acrylate, 2-(2-ethoxyethoxy)ethyl acrylate, 2-methoxyethyl acrylate, 3-methoxybutyl acrylate, ethoxylated phenyl acrylate, 2-acryloyloxyethyl succinic acid, nonylphenol EO adduct acrylate, phenoxy-polyethylene glycol acrylate, 2-acryloyloxyethylhexahydrophthalic acid, lactone modified acrylate, stearyl acrylate, isoamyl acrylate, isomyristyl acrylate, isostearyl acrylate, and lactone modified acrylate;
methacrylate compounds such as methyl methacrylate, n-butyl methacrylate, allyl methacrylate, glycidyl methacrylate, benzyl methacrylate, and dimethylaminomethyl methacrylate;
allyl compounds such as allyl glycidyl ether; and
vinyl ether compounds such as methyl vinyl ether, ethyl vinyl ether, n-propyl vinyl ether, isopropyl vinyl ether, n-butyl vinyl ether, isobutyl vinyl ether, t-butyl vinyl ether, n-octadecyl vinyl ether, 2-ethylhexyl vinyl ether, n-nonyl vinyl ether, dodecyl vinyl ether, octadecyl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, phenoxypolyethylene glycol vinyl ether, cyclohexane dimethanol monovinyl ether, and isopropenyl ether-O-propylene carbonate.

According to the invention, it is preferable to contain a nitrogen atom-containing monofunctional polymerizable compound in the monofunctional polymerizable compound (in the present specification, the "nitrogen atom-containing monofunctional polymerizable compound" may be referred to as the component b1-N). In addition, in the monofunctional polymerizable compound, the nitrogen atom-containing monofunctional polymerizable compound is contained preferably in an amount of from 10% by mass to 90% by mass, more preferably in an amount of from 10% by mass to 80% by mass, and particularly preferably in an amount of from 15% by mass to 70% by mass.

The (component b1-N) nitrogen atom-containing monofunctional polymerizable compound is more preferably a compound represented by the following Formula (M1) or (M2).

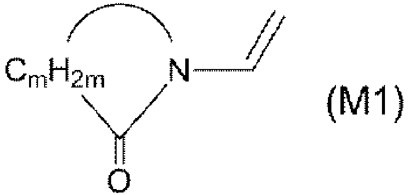

In the formula, m represents an integer of from 2 to 6. m represents preferably an integer of from 3 to 5, more preferably an integer of 3 or 5, and particularly preferably an integer of 5, that is, N-vinyl caprolactam is particularly preferable.

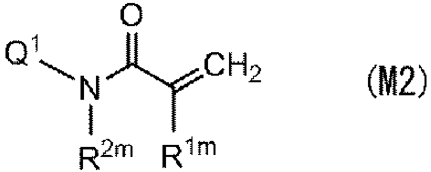

In Formula (M2), Q¹ represents a monovalent group, R^{1m} represents a hydrogen atom or a methyl group, and R^{2m} represents a hydrogen atom, an alkyl group, or an aryl group, and Q¹ and R^{2m} may bind to each other to form a ring.

The compound of Formula (M2) is a compound in which an unsaturated monomer is bound to Q¹ through an amide bond.

R^{1m} represents a hydrogen atom or a methyl group, and is preferably a hydrogen atom.

When R^{2m} is an alkyl group, the alkyl group preferably has 1 to 10 carbon atoms, and more preferably 1 to 6 carbon atoms.

When R^{2m} is an aryl group, the aryl group preferably has 6 to 20 carbon atoms, and more preferably 6 to 14 carbon atoms.

Q¹ is not particularly limited as long as it is a group that can be linked to a (meth)acrylamide structure. As used herein, the (meth)acrylamide structure means an acrylamide structure or a methacrylamide structure.

Q¹ is preferably an alkyl group having 1 to 20 carbon atoms, and an oxygen atom or a nitrogen atom may be contained in the alkyl group. Further, the alkyl group may have a linear structure, a branched structure, or a cyclic structure. The alkyl group preferably has 1 to 16 carbon atoms, and more preferably 1 to 10 carbon atoms.

Specific examples of Q¹ include those described below, but the invention it not limited to these:
a methyl group, an ethyl group, a propyl group, a butyl group, an isobutyl group, a t-butyl group, a cyclohexyl group, a dimethylaminopropyl group, a dimethylaminoethyl group, or the like.

According to the invention, a molecular weight of the (component b1) monofunctional polymerizable compound is preferably 130 to 3000 and more preferably 130 to 500.

Further, according to the invention, an additional polymerizable compound may be contained in addition to the (component b1) monofunctional polymerizable compound.

### <Polymerizable compound other than the monofunctional polymerizable compound>

In the ink composition of the invention, a polymerizable compound other than the (component b1) monofunctional polymerizable compound may be contained (other polymerizable compound), if necessary. Examples of other polymerizable compound include a polyfunctional radical polymerizable compound having two or more radical polymerizable ethylenically unsaturated bonds.

Examples of other polymerizable compound include acrylate compounds such as bis(4-acryloxypolyethoxyphenyl)propane, tripropylene glycol diacrylate, polyethylene glycol diacrylate, polypropylene glycol diacrylate, dipentaerythritol tetraacrylate, trimethylol propane (PO modified) triacrylate, oligoester acrylate, hydroxypivalic acid neopentyl glycol diacrylate, tetramethylol methane triacrylate, dimethylol tricyclodecane diacrylate, modified glycerin triacrylate, bisphenol A diglycidyl ether acrylic acid adduct, modified bisphenol A diacrylate, PO adduct diacrylate of bisphenol A, EO adduct diacrylate of bisphenol A, dipentaerythritol hexaacrylate, propylene glycol diglycidyl ether acrylic acid adduct, and ditrimethylol propane tetraacrylate; and methacrylate compounds such as polyethylene glycol dimethacrylate and polypropylene glycol dimethacrylate 2,2-bis(4-methacryloxypolyethoxyphenyl)propane. Further examples thereof include allyl compounds such as diallyl phthalate and triallyl trimellitate. PO represents propylene oxide and EO represents ethylene oxide.

Preferable examples of the polyfunctional radical polymerizable monomer also include polyfunctional vinyl ether. Examples of the polyfunctional vinyl ether include divinyl ethers such as ethylene glycol divinyl ether, diethylene glycol divinyl ether, triethylene glycol divinyl ether, polyethylene glycol divinyl ether, propylene glycol divinyl ether, dipropylene glycol divinyl ether, butylene glycol divinyl ether, butanediol divinyl ether, hexanediol divinyl ether, cyclohexane dimethanol divinyl ether, bisphenol A alkylene oxide divinyl ether, and bisphenol F alkylene oxide divinyl ether; and polyfunctional vinyl ethers such as trimethylol ethane trivinyl ether, trimethylol propane trivinyl ether, ditrimethylol propane tetravinyl ether, glycerin trivinyl ether, pentaerythritol tetravinyl ether, dipentaerythritol pentavinyl ether, dipentaerythritol hexavinyl ether, ethylene oxide added trimethylol propane trivinyl ether, propylene oxide added trimethylol propane trivinyl ether, ethylene oxide added ditrimethylol propane tetravinyl ether, propylene oxide added ditrimethylol propane tetravinyl ether, ethylene oxide added pentaerythritol tetravinyl ether, propylene oxide added pentaerythritol tetravinyl ether, ethylene oxide added dipentaerythritol hexavinyl ether, and propylene oxide added dipentaerythritol hexavinyl ether. Of those polyfunctional vinyl ether compounds, a di- or trivinyl ether compound is preferable, and a divinyl ether compound is particularly preferable, from the viewpoints of curability, adhesion property to a recording medium, and surface hardness of a formed image or the like.

Further, in addition to the compounds described above, as the polyfunctional radical polymerizable compound, for example, photocurable polymerizable compounds that are used in the photopolymerizable composition described in publications of JP-A No. 7-159983, Japanese Patent Application Publication (JP-B) No. 7-31399, JP-A No. 8-224982, JP-A No. 10-863, JP-A No. 9-134011, and Japanese Patent Application National Publication (Laid-Open) No. 2004-514014 are known, and they may be also used in the ink composition of the invention.

According to the invention, a molecular weight of other polymerizable compound is preferably 130 to 3000 and more preferably 130 to 500, as a molecular weight.

A content of other polymerizable compound is generally 30% by mass or less and preferably from 0% by mass to 20% by mass, with respect to the total amount of the ink composition. In particular, a polyfunctional radical polymerizable monomer is preferably contained as other polymerizable compound according to the invention.

### <Polymerization initiator>

The ink composition of the invention includes a polymerization inhibitor.

The polymerization initiator in the invention may be any one of a thermal polymerization initiator and a photopolymerization initiator. However, a photopolymerization initiator is preferabe in the invention. As for the photopolymerization initiator, a known photopolymerization initiator may be suitably selected and used depending on the type of the polymerizable compound and the purpose of use of the ink composition.

The photopolymerization initiator used in the ink composition of the invention is a compound which absorbs external energy (that is, light) and generates a radical as polymerization initiating species. With regard to the photopolymerization initiator, the light for initiating polymerization means an active energy ray, that is, a γ ray, a β ray, an electronic beam, an ultraviolet ray, a visible ray, and an infrared ray, and is preferably an ultraviolet ray.

A known compound may be used as a photopolymerization initiator. Preferable examples of the photopolymerization initiator that can be used in the invention include (a) aromatic ketones, (b) acyl phosphine oxide compounds, (c) aromatic onium salt compounds, (d) organic peroxides, (e) thio compounds, (f) hexaaryl biimidazole compounds, (g) ketooxime ester compounds, (h) borate compounds, (i) azinium compounds, (j) metallocene compounds, (k) active ester compounds, (1) compounds having a carbon-halogen bond, and (m) alkylamine compounds.

As for the photopolymerization initiator, the compound of (a) to (m) described above may be used either singly or in combination. According to the invention, the photopolymerization initiator is preferably used either singly or in combination of two or more types.

Preferred examples of (a) aromatic ketones, (b) acyl phosphine oxide compounds, and (e) thio compounds include compounds having a benzophenone skeleton or a thioxanthone skeleton described in "RADIATION CURING IN POLYMER SCIENCE AND TECHNOLOGY" by J. P. FOUASSIER and J. F. RABEK (1993), pp. 77 to 117. More preferred examples thereof include α-thiobenzophenone compounds described in JP-B No. 47-6416, benzoin ether compounds described in JP-B No. 47-3981, α-substituted benzoin compounds described in JP-B No. 47-22326, benzoin derivatives described in JP-B No. 47-23664, aroylphosphonic esters described in JP-A No. 57-30704, dialkoxybenzophenones described in JP-B No. 60-26483, benzoin ethers described in JP-B No. 60-26403 and JP-A No. 62-81345, α-aminobenzophenones described in JP-B No. 01-34242, U.S. Patent No. 4,318,791, and European Patent No. 0284561A1, p-di(dimethylaminobenzoyl)benzenes described in JP-A No. 02-211452, thio-substituted aromatic ketones described in JP-A No. 61-194062, acylphosphine sulfides described in JP-B No. 02-9597, acylphosphines described in JP-B No. 02-9596, thioxanthones described in JP-B No. 63-61950, and coumarins described in JP-B No. 59-42864.

In addition, the polymerization initiators described in JP-A Nos. 2008-105379 and 2009-114290 are also preferable.

Of those, aromatic ketones or acylphosphine oxide compounds are preferably used as a photopolymerization initiator in the invention. Preferred examples thereof include p-phenylbenzophenone (manufactured by Wako Pure Chemical Industries, Ltd.), bis(2,4,6-trimethylbenzoyl)-phenylphosphine oxide (IRGACURE 819: manufactured by BASF), bis(2,6-dimethoxybenzoyl)-2,4,4-trimethyl-pentylphenylphosphine oxide, and 2,4,6-trimethylbenzoyl-diphenyl-phosphine oxide (DAROCUR TPO: manufactured by BASF and LUCIRIN TPO: manufactured by BASF).

The polymerization initiator may be used either singly or in combination of two or more types.

A content of the polymerization initiator in the ink composition is preferably from 0.1% by mass to 20% by mass, more preferably from 0.5% by mass to 15% by mass, and still more preferably from 1% by mass to 10% by mass, with respect to the ink composition.

### <Colorant>

The ink composition of the invention may contain a colorant (in the present specification, the "colorant" may be referred to as component D). By adding a colorant to the ink composition, an ink composition capable of forming a visible image (that is, color image) can be provided.

The colorant that can be used in the ink composition of the invention is not particularly limited, and various known coloring substances (pigment and dye) may be suitably selected and used depending on use. For example, when an image with excellent weather resistance is to be formed, a pigment is preferable. In addition, as a dye, any of a water soluble dye and an oil soluble dye may be used. However, an oil soluble dye is preferable.

### -Pigment-

First, the pigment that is preferably used as a colorant in the ink composition of the invention is described. When a pigment is used as a colorant, the colored image formed by using the ink composition has excellent light resistance.

The pigment is not particularly limited, and any commercially available organic pigments, inorganic pigments, and pigments dispersed in an insoluble resin or the like as a dispersion medium, pigments of which surface is grafted with a resin, or the like may be used. Further, resin particles dyed with a dye may be also used.

Examples of the pigment include those described in "Ganryo no Jiten (Pigment Dictionary)" edited by Seishiro Ito (2000), "Industrial Organic Pigments" by W. Herbst, K. Hunger, JP-ANos. 2002-12607, 2002-188025, 2003-26978 and 2003-342503.

Specific examples of organic pigments and inorganic pigments that are used in the invention and exhibit yellow color include a monoazo pigment such as C.I. Pigment Yellow 1 (for example, Fast Yellow G) or C.I. Pigment Yellow 74; a disazo pigment such as C.I. Pigment Yellow 12 (for example, Disazo Yellow AAA) or C.I. Pigment Yellow 17; a non-benzidine based azo pigment such as C.I. Pigment Yellow 180; an azo lake pigment such as C.I. Pigment Yellow 100 (for example, Tartrazine Yellow Lake); a condensed azo pigment such as C.I. Pigment Yellow 95 (for example, Condensed Azo Yellow GR); an acidic dye lake pigment such as C.I. Pigment Yellow 115 (for example, Quinoline Yellow Lake); a basic dye lake pigment such as C.I. Pigment Yellow 18 (for example, Thioflavin Lake), an anthraquinone pigment such as Flavanthrone Yellow (Y-24); an isoindolinone pigment such as Isoindolinone Yellow 3RLT (Y-110); a quinophthalone pigment such as Quinophthalone Yellow (Y-138); an isoindoline pigment such as Isoindoline Yellow (Y-139); a nitroso pigment such as C.I. Pigment Yellow 153 (for example, Nickel Nitroso Yellow); and a metallic complex salt azomethine pigment such as C.I. Pigment Yellow 117 (for example, Copper Azomethine Yellow).

Examples of organic pigments and inorganic pigments that exhibit red or magenta color include a monoazo pigment such as C.I. Pigment Red 3 (for example, Toluidine Red); a disazo pigment such as C.I. Pigment Red 38 (for example, Pyrazolone Red B); an azo lake pigment such as C.I. Pigment Red 53:1 (for example, Lake Red C) or C.I. Pigment Red 57:1 (for example, Brilliant Carmine 6B); a condensed azo pigment such as C.I. Pigment Red 144 (for example, Condensed Azo Red BR); an acidic dye lake pigment such as C.I. pigment red 174 (for example, Phloxin B lake); a basic dye lake pigment such as C.I. Pigment Red 81 (for example, Rhodamine 6G' Lake); an anthraquinone pigment such as C.I. Pigment Red 177 (for example, Dianthraquinonyl Red); a thioindigo pigment such as C.I. Pigment Red 88 (for example, Thioindigo Bordeaux); a perynone pigment such as C.I. Pigment Red 194 (for example, Perynone Red); a perylene pigment such as C.I. Pigment Red 149 (for example, Perylene Scarlett); a quinacridone pigment such as C.I. Pigment Violet 19 (unsubstituted quinacridone) or C.I. Pigment Red 122 (for example, Quinacridone Magenta); an isoindolinone pigment such as C.I. Pigment Red 180 (for example, Isoindolinone Red 2BLT); and an alizarin lake pigment such as C.I. Pigment Red 83 (for example, Madder Lake).

Examples of organic pigments and inorganic pigments that exhibit blue or cyan color include a disazo based pigment such as C.I. Pigment Blue 25 (for example, Dianisidine Blue); a phthalocyanine pigment such as C.I. Pigment Blue 15 (for example, Phthalocyanine Blue); an acidic dye lake pigment such as C.I. Pigment Blue 24 (for example, Peacock Blue Lake); a basic dye lake pigment such as C.I. Pigment Blue 1 (for example, Victoria Pure Blue BO Lake); an anthraquinone based pigment such as C.I. Pigment Blue 60 (for example, Indanthrone Blue); and an alkali blue pigment such as C.I. Pigment Blue 18 (for example, Alkali Blue V-5:1).

Examples of organic pigments and inorganic pigments that exhibit green color include a phthalocyanine pigment such as C.I. Pigment Green 7 (Phthalocyanine Green) or C.I. Pigment Green 36 (Phthalocyanine Green); and an azo metal complex salt pigment such as C.I. Pigment Green 8 (Nitroso Green).

Examples of organic pigments and inorganic pigments that exhibit orange color include an isoindoline based pigment such as C.I. Pigment Orange 66 (Isoindoline Orange); and an anthraquinone based pigment such as C.I. Pigment Orange 51 (Dichloropyranthrone Orange).

Examples of organic pigments and inorganic pigments that exhibit black color include carbon black, titanium black, and aniline black.

As specific examples of white pigment, basic lead carbonate (2PbCO₃Pb(OH)₂, so-called silver white), zinc oxide (ZnO, so-called zinc white), titanium oxide (TiO₂, so-called, titanium white), and strontium titanate (SrTiO₃, so-called titanium strontium white) , and the like can be used.

Here, titanium oxide has a smaller specific gravity and a greater refractive index, and is chemically and physically stable, compared to other white pigments. Therefore, titanium oxide has a greater concealing and coloring power as a pigment, and furthermore has a superior durability against acid, alkali, and other environment. Therefore, the titanium oxide is preferably used as a white pigment. Of course, other white pigments (may be other than the abovementioned white pigments) may be used as necessary.

For dispersing the pigment, for example, a dispersing device such as a ball mill, a sand mill, an attritor, a roll mill, a jet mill, a homogenizer, a paint shaker, a kneader, an agitator, a Henschel mixer, a colloid mill, an ultrasonic homogenizer, a pearl mill, or a wet type jet mill may be used.

Dispersing agent can also be added when a pigment is dispersed. Examples of the dispersing agent include a hydroxyl group-containing carboxylic acid ester, a salt of long-chain polyaminoamide and high molecular weight acid ester, a salt of high molecular weight polycarboxylic acid, high molecular weight unsaturated acid ester, a high molecular weight copolymer, a modified polyacrylate, an aliphatic polyvalent carboxylic acid, a naphthalene sulfonic acid-formalin condensate, a polyoxyethylene alkyl phosphate ester, and pigment derivatives. Moreover, a commercially available polymer dispersing agent such as SOLSPERSE series by Lubrizol may be preferably used.

As a dispersing aid, a synergist depending on various types of pigments may be used. The dispsersing agent and the dispersing aid rae preferably added in an amount of from 1 part by mass to 50 parts by mass with respect to 100 parts by mass of the pigment.

In the ink composition, a solvent may be added as a dispersion medium for various components such as a pigment, or the polymerizable compound that is a low molecular weight component may be used as a dispersion medium, without any solvent. Since the ink composition of the invention is an energy ray curable type ink and the ink is cured after the application on the recording medium, it is preferred not to use a solvent.

The volume average particle diameter of the pigment particle in the ink composition is preferably from 0.02 µm to 0.60 µm, and more preferably from 0.02 µm to 0.10 µm. Further, the maximum particle diameter is preferably 3 µm or less, and more preferably 1 µm or less. To have such a range, the pigment, dispersing agent, and dispersion medium are selected, and conditions for dispersion and conditions for filtration are set. By control of the particle diameter, clogging of the head nozzle is suppressed and the storage stability, the ink transparency, and the blocking sensitivity of the ink can be maintained. The volume average particle diameter is measured using a laser diffraction and scattering type particle size distribution analyzer (trade name: LA920, manufactured by HORIBA, Ltd.) and with tripropylene glycol methyl ether as a measurement solvent.

### -Dye-

Next, a dye preferably used as the colorant in the invention is explained.

The dye may be properly selected from conventionally known compounds (dyes) and used. Specific examples thereof include compounds described in JP-A No. 2002-114930 paragraphs [0023] to [0089] and JP-A No. 2008-13646 paragraphs [0136] to [0140], and these can be also used in the invention.

The colorant is preferably added in an amount of from 0.05% by mass to 20% by mass, and more preferably in an amount of from 0.2% by mass to 10% by mass, with respect to the total mass of the ink composition. When an oil-soluble dye is used as a colorant, the amount added is particularly preferably from 0.2% by mass to 6% by mass with respect to the total mass (including solvent) of the ink composition.

### <Water>

The ink composition of the invention is preferably a non-aqueous ink composition which contains substantially no water. Specifically, a content of water is preferably 3% by mass or less, more preferably 2% by mass or less, and most preferably 1% by mass or less, with respect to the total mass of the ink composition. Therefore, it is excellent in terms of storage stability.

### <Other components>

Other components may be added to the ink composition of the invention in addition to those described above. Explanations are given in order herein below.

### (Chain transfer agent)

The ink composition of the invention may additionally contain a chain transfer agent.

The chain transfer agent may be used without any specific limitation as long as it can transfer an active point of the reaction by a chain transfer reaction during polymerization reaction.

Specific examples of the chain transfer agent that can be used in the invention include halogen compounds such as carbon tetrachloride and carbon tetrabromide; alcohols such as isopropyl alcohol and isobutyl alcohol; olefins such as 2-methyl-1-butene and 2,4-diphenyl-4-methyl-1-pentene; and sulfur-containing compounds such as ethane thiol, butane thiol, dodecane thiol, mercaptoethanol, mercaptopropanol, methyl mercaptopropionate, ethyl mercaptopropionate, mercaptopropionic acid, thioglycolic acid, ethyl disulfide, sec-butyl disulfide, 2-hydroxyethyl disulfide, thiosalicylic acid, thiophenol, thiocresol, benzylmercaptan, phenethyl mercaptan, thiocarbonate, 1,4-bis(3-mercaptobutyryloxy)butane, 1,3,5-tris(3-mercaptobutyloxyethyl)-1,3,5-triazine-2,4,6(1H,3H,5H)-trione, and pentaerythritol tetrakis(3-mercaptobutyrate), but are not limited thereto.

Of those described above, from the viewpoints of enhancing the storage stability and sensitivity of the ink composition, the chain transfer agent is preferably a thiol compound. Further, the chain transfer agent is more preferably a polyfunctional thiol compound of a secondary or a tertiary thiol.

A molecular weight of the chain transfer agent is preferably 250 or more, and in particular, preferably from 250 to 100,000, more preferably from 500 to 80,000, and most preferably from 3,000 to 80,000.

As a commercially available product, KARENZ MT series (manufactured by Showa Denko K.K.) are preferably used.

The chain transfer agent may be used either singly or in combination of two or more types.

The amount of the chain transfer agent added to the ink composition of the invention is preferably from 0.1% by mass to 15 % by mass, more preferably from 0.5% by mass to 10% by mass, and most preferably from 1% by mass to 10% by mass, with respect to the total solid content of the ink composition.

### (Sensitizing pigment)

A sensitizing pigment may be added to the ink composition of the invention for the purpose of promoting a decomposition of the polymerization initiator caused by irradiation with an active energy ray. A sensitizing pigment absorbs a specific active energy ray to be in an electron excitation state. The sensitizing pigment in an electron excitation state then contacts the polymerization initiator to cause an action such as an electron transfer, an energy transfer, heat generation, or the like, thereby promoting chemical change of the polymerization initiator, that is, decomposition and generation of radical, acid, or base.

As for the sensitizing pigment, a compound which generates an initiation species, depending on the wavelength of the active energy ray, on the photopolymerization initiator used in the ink composition may be used. Considering that the sensitizing pigment is generally used for a curing reaction of an ink composition, preferred examples of the sensitizing pigment include those belonging to the following compounds and also having absorption wavelength in a range of from 350 nm to 450 nm.

Examples thereof include polynuclear aromatics (for example, anthracene, pyrene, perylene, and triphenylene), thioxantones (for example, isopropyl thioxantones), xanthenes (for example, fluorescein, eosin, erythrosin, rhodamine B, and rose bengal), cyanines (for example, thiacarbocyanine and oxacarbocyanine), merocyanines (for example, merocyanine and carbomerocyanine), thiazines (for example, thionine, methylene blue, and toluidine blue), acridines (for example, acridine orange, chloroflavine, and acriflavine), anthraquinones (for example, anthraquinone), squaryliums (for example, squarylium), and coumarins (for example, 7-diethylamino-4-methyl coumarin). Preferred examples thereof include polynuclear aromatics and thioxantones.

In addition, the sensitizing pigment described in JP-A No. 2008-95086 is also preferable.

### (Co-sensitizing agent)

The ink composition of the invention may also contain a co-sensitizing agent. In the invention, the co-sensitizing agent has a function that sensitivity of a sensitizing pigment to an active energy ray is further improved, polymerization inhibition of a polymerizable compound by oxygen is suppressed, or the like.

Examples of the co-sensitizing agent include amines, for example, compounds described in "Journal of Polymer Science" vol. 10, p 3173 (1972) written by M. R. Sander et al, JP-B No. 44-20189, JP-A No. 51-82102, JP-A No. 52-134692, JP-A No. 59-138205, JP-A No. 60-84305, JP-A No. 62-18537, JP-A No. 64-33104, and Research Disclosure No. 33825. Specific examples of the co-sensitizing agent include triethanolamine, p-dimethylamino benzoic acid ethyl ester, p-formyl dimethylaniline, and p-methylthiodimethylaniline.

Other examples of the co-sensitizing agent include thiols and sulfides, for example, thiol compounds described in JP-A No. 53-702, JP-B No. 55-500806, and JP-A No. 5-142772 and disulfide compounds described in JP-A No. 56-75643. Specific examples thereof include 2-mercaptobenzothiazole, 2-mercaptobenzoxazole, 2-mercaptobenzoimidazole, 2-mercapto-4(3H)-quinazoline, and β-mercaptonaphthalene.

Further, other examples of the co-sensitizing agent include amino acid compounds (such as N-phenyl glycine), organic metal compounds described in JP-B No. 48-42965 (such as tributyl tin acetate), hydrogen donors described in JP-B No. 55-34414, sulfur compounds described in JP-A No. 6-308727 (such as trithiane), phosphorus compounds described in JP-A No. 6-250387 (such as diethyl phosphite), and Si-H or Ge-H compounds described in JP-A No. 8-65779.

### (Ultraviolet absorbing agent)

An ultraviolet absorbing agent may be used in the ink composition of the invention from the viewpoints of improving the weather resistance, preventing discoloration, and the like of an image to be obtained.

Examples of the ultraviolet absorbing agent include benzotriazole based compounds described in JP-A Nos. 58-185677, 61-190537, 02-782, 5-197075 and 09-34057; benzophenone based compounds described in JP-A Nos. 46-2784 and 05-194483, and U.S. Patent No. 3,214,463; cinnamic acid based compounds described in JP-B Nos. 48-30492 and 56-21141, and JP-A No. 10-88106; triazine based compounds described in JP-A Nos. 04-298503, 08-53427, 08-239368 and 10-182621, and Japanese Patent Application National Publication (Laid-Open) No. 08-501291; compounds described in Research Disclosure No. 24239; and compounds which absorb ultraviolet rays to generate fluorescence represented by stilbene based and benzoxazole based compounds, so-called fluorescent brightening agents.

The addition amount is suitably selected depending on the purpose, and, in general, is preferably from 0.5% by mass to 15% by mass in terms of solid content.

### (Anti-oxidant)

An anti-oxidant may be added to the ink composition of the invention in order to improve the stability.

Examples of the anti-oxidant include those described in European Patent Publication Nos. 223739, 309401, 309402, 310551, 310552 and 459416, German Patent Publication No. 3435443, JP-A Nos. 54-48535, 62-262047, 63-113536, 63-163351, 02-262654, 02-71262, 03-121449, 05-61166 and 05-119449, and U.S. Patent Nos. 4,814,262 and 4,980,275.

The addition amount is suitably selected depending on the purpose, and preferably from 0.1% by mass to 8% by mass in terms of solid content.

### (Discoloration Inhibitor)

Various organic based discoloration inhibitors and metal complex based discoloration inhibitors may be used in the ink composition of the invention. Examples of organic based discoloration inhibitors include hydroquinones, alkoxyphenols, dialkoxyphenols, phenols, anilines, amines, indanes, chromanes, alkoxyanilines, and heterocycles.

Examples of metal complex based discoloration inhibitors include a nickel complex and a zinc complex. Specific examples thereof include the compounds described in the patents cited in the I to J paragraphs of the VII section of Research Disclosure No. 17643, Research Disclosure No. 15162, the left column of page 650 of Research Disclosure No. 18716, page 527 of Research Disclosure No. 36544, page 872 of Research Disclosure No. 307105, and Research Disclosure No. 15162, and compounds which are included in general formulae of the representative compounds and examples of the compounds, described in JP-A No. 62-215272, pages 127 to 137.

The addition amount is suitably selected depending on the purpose, and preferably from 0.1 % by mass to 8% by mass in terms of solid content.

### (Electroconductive Salts)

For the purpose of controlling the jetting property, an electroconductive salt such as potassium thiocyanate, lithium nitrate, ammonium thiocyanate, or dimethylamine hydrochloride may be added to the ink composition of the invention

### (Solvent)

In order to improve the adhesive property onto the recording medium (base material), trace amount of non-curable organic solvent may be added to the ink composition of the invention.

Examples of the solvent include ketone based solvents such as acetone, methyl ethyl ketone, and diethyl ketone; alcohol based solvents such as methanol, ethanol, 2-propanol, 1-propanol, 1-butanol, and tert-butanol; chlorine based solvents such as chloroform and methylene chloride; aromatic solvents such as benzene and toluene; ester based solvents such as ethyl acetate, butyl acetate, and isopropyl acetate; ether based solvents such as diethyl ether, tetrahydrofuran, and dioxane; and glycol ether based solvents such as ethylene glycol monomethyl ether and ethylene glycol dimethyl ether.

In this case, the addition of the solvent within the range that does not cause a problem such as solvent resistance or VOC is effective. The amount thereof is preferably from 0.1% by mass to 5% by mass, and more preferably from 0.1% by mass to 3% by mass, with respect to the total ink composition.

### (Polymer Compound)

In order to adjust physical properties, various oil soluble polymer compounds may be used in combination in the ink composition of the invention.

Examples of an oil soluble polymer compound include an acrylic based polymer, a polyvinyl butyral resin, a polyurethane resin, a polyamide resin, a polyester resin, an epoxy resin, a phenol resin, a polycarbonate resin, a polyvinyl butyral resin, a polyvinylformal resin, a shellac, a vinyl based resin, an acrylic based resin, a rubber based resin, waxes, and other natural resins. Two types of these may be used in combination. Among these, a vinyl based copolymer obtained by copolymerization of acrylic based monomers is preferable. Furthermore, copolymers including a "carboxyl group-containing monomer", an "alkyl ester of methacrylic acid", or an "alkyl ester of acrylic acid" as a structural unit can also preferably be used as a copolymerization composition of the polymer compound.

Further, for the purpose of improving tackifying property or the like when the ink composition of the invention is formed into a film, a polymer compound that tends to be localized on a surface is also preferable. As for the polymer compound, a polymer containing an Si or F atom, a polymer having a long chain alkyl group in a side chain thereof, and the like that are described in JP-A No. 2008-248119 paragraphs [0017] to [0037] and JP-A No. 2005-250890 paragraphs [0015] to [0034] can be used.

### (Surfactant)

A surfactant may be added to the ink composition of the invention.

Examples of the surfactant include those described in JP-A Nos. 62-173463 and 62-183457. Examples thereof include anionic surfactants such as dialkyl sulfosuccinates, alkyl naphthalene sulfonates, and fatty acid salts; nonionic surfactants such as polyoxyethylene alkyl ether, polyoxyethylene alkyl allyl ether, acetylene glycol, and polyoxyethylene-polyoxypropyrene block copolymers; and cationic surfactants such as alkylamine salts and quaternary ammonium salts.

An organic fluoro compound may be used instead of the surfactant.

The organic fluoro compound is preferably hydrophobic. Examples of the organic fluoro compound include a fluorine-containing surfactant, an oily fluorine-containing compound (such as fluorine oil), a solid-form fluorine-containing compound resin (such as ethylene tetrafluoride resin), and those described in JP-B No. 57-9053 (columns 8 to 17), and JP-A No. 62-135826.

A content of the surfactant in the composition is suitably selected depending on the intended use, and is preferably from 0.0001 % by mass to 1% by mass, and more preferably from 0.001 % by mass to 0.1 % by mass, with respect to the total ink composition.

In addition, for example, a polymerization inhibitor, a leveling additive, a matting agent, waxes for adjusting the film property, and a tackifier (adhesion providing agent) which does not inhibit the polymerization to improve adhesive property onto a recording medium such as polyolefine, PET, or the like may be added, if necessary.

Examples of the polymerization inhibitor include hydroquinone, methoxybenzoquinone, methoxyphenol, phenothiazine, t-butylcatechol, mercaptobenzimidazole, alkyldithiocarbamic acid salts, alkylphenols, alkylbisphenols, salicylic acid salts, thiodipropionic acid esters, phosphites, and nitroxide aluminum complex. Specific examples thereof include GERORAD 16, 18, 20, 21, and 22 (manufactured by Rahn). A content of the polymerization inhibitor is from 0.01% by mass to 5% by mass, and more preferably from 0.02% by mass to 1% by mass, with respect to the ink composition, although it is not limited thereto.

Specific examples of the tackifier include high molecular weight-adhesive polymers described in JP-A No. 2001-49200, pages 5 to 6 (for example, a copolymer comprising an ester of (meth)acrylic acid and alcohol having an alkyl group having 1 to 20 carbon atoms, an ester of (meth)acrylic acid and alicyclic alcohol having 3 to 14 carbon atoms, and an ester of (meth)acrylic acid and aromatic alcohol having 6 to 14 carbon atoms), and low molecular weight-tackifying resins having a polymerizable unsaturated bond.

### (Preferred physical properties of ink composition)

The ink composition of the invention is preferably used for inkjet application. Thus, considering jetting property, the viscosity of the ink composition of the invention is preferably from 7 mPa·s to 30 mPa·s, and more preferably from 7 mPa·s to 20 mPa·s, at the temperature at the time of jetting (for example, from 25°C to 80°C, and preferably from 25°C to 30°C).

It is preferable that a compositional ratio of the ink composition of the invention be suitably adjusted such that viscosity of the ink composition falls within the range. By setting a viscosity high at room temperature, ink permeation into a recording medium is avoided even when a porous recording medium is used, and thus an uncured monomer can be reduced and malodor can be suppressed. In addition, ink bleeding is prevented at the time of jetting liquid ink droplets, as a result of which, the image quality is improved, and therefore it is desirable.

Surface tension of the ink composition of the invention is preferably from 20 mN/m to 40 mN/m at 25°C. The surface tension is measured under the condisiton of 25°C using AUTOMATIC SURFACE TENSIOMETER CBVP-Z (manufactured by Kyowa Interface Science Co., Ltd.). Further, the viscosity is preferably from 1 mPa·s to 40 mPa·s, and more preferably from 3 mPa·s to 30 mPa·s. The viscosity of the ink composition is measured under the condition of 25°C using VISCOMETER TV-22 (manufactured by TOKI SANGYO Co., Ltd.).

The ink composition of the invention is preferably used for inkjet recording. When applied for inkjet recording, the ink composition of the invention is jetted onto a recording medium by an inkjet recording device, and after that, the jetted ink composition is irradiated with an energy ray for curing to perform recording.

### <Printed matter and image forming method>

The image forming method of the invention includes an ink application process of applying the ink composition to a recording medium, and an irradiation process of irradiating the applied ink composition with an active energy ray. For example, it is preferable to include a process of jetting the ink composition of the invention to a recording medium by an inkjet system using a known inkjet recording device or the like including a commercially available device to form an image, and a process of irradiating the obtained image with an active energy ray to cure the ink composition, thereby obtaining printed matter having a cured image on the recording medium.

The recording medium (base material) that may be used in the invention is not particularly limited, and paper such as general non-coat paper and coat paper, various non-absorbing resin materials used for so-called soft packaging, or a resin film in which the non-absorbing resin material is formed into a film shape may be used. Examples of various plastic films include a PET film, an OPS film, an OPP film, an ONy film, a PVC film, a PE film, and a TAC film. Examples of other plastics that can be used as a material of the recording medium include polycarbonate, acrylic resin, ABS, polyacetal, PVA, and rubbers. Moreover, metals or glasses may be used as the recording medium.

Examples of the active energy ray used in the invention include α rays, γ rays, X rays, ultraviolet rays, visible light, infrared light, and electron beams. The peak wavelength of the active energy ray is preferably from 200 nm to 600 nm, more preferably from 300 nm to 450 nm, and still more preferably from 350 nm to 420 nm. Further, the output of the active energy ray is preferably 2,000 mW/cm² or less, more preferably from 10 mW/cm² to 2,000 mW/cm², still more preferably from 20 mW/cm² to 1,000 mW/cm², and particularly preferably from 50 mW/cm² to 800 mW/cm².

In particular, in the image forming method of the invention, the irradiation of the energy ray is preferably performed by a light emitting diode that emits ultraviolet rays having a peak emission wavelength of from 350 nm to 420 nm, and a maximum luminance on the recording medium surface of from 10 mW/cm² to 2,000 mW/cm². The ink composition of the invention is cured with high sensitivity even with light with low exposure amount such as light emitted from a light emitting diode.

The printed matter obtained by the invention is printed matter in which an image is formed with the ink composition of the invention by the image forming method described above. Thus, an image with high hardness is formed and printed matter has an image with excellent moldability and punching property.

Further, the ink composition of the invention can be also preferably used, in addition to being preferably used for forming an image of general printed matter as described above, in an embodiment in which processing is performed after an image is formed on a recording medium such as support or the like.

The molded article of printed matter obtained by the invention is a molded article of printed matter in which the printed matter in the invention is mold-processed, and is manufactured by a method of producing the molded article of printed matter in the invention which includes: a process of forming an image by jetting, onto a recording medium, the active energy ray-curing type inkjet ink composition of the invention described above by an inkjet system; a process of obtaining printed matter having a cured image on the recording medium by irradiating the obtained image with an active energy ray to cure the ink composition; and a process of obtaining a molded article of printed matter by mold-processing of the printed matter.

With regard to the recording medium used in production of the molded article of printed matter, a recording medium formed from a moldable resin material is used, and examples thereof include PET, polycarbonate, and polystyrene.

With regard to the processing method for producing the molded article of printed matter, vacuum molding, air-pressure molding, or vacuum air-pressure molding is most preferable. In principle, the vacuum molding includes pre-heating a flat support to a thermally deformable temperature in advance and sucking, to a mold, the pre-heated support by de-pressurizing while stretching, thereby performing press-pressuring and cooling onto a mold. The air-pressure molding includes pressurizing from a side of a support opposite to the mold. Further, the vacuum air-pressure molding includes simultaneously performing the de-pressurizing and pressurizing.

### EXAMPLES

Hereinafter, the invention is more specifically described with reference to Examples, but the invention is not limited to these Examples as long as it is within the main spirit of the invention. Unless specifically otherwise noted, "%" and "parts" are all based on mass.

Among the compounds used in Examples and Comparative Examples, compounds which are not described with a manufacturer were synthesized by a known method or by modifying a known method.

· Methyl ethyl ketone (also referred to as MEK, manufactured by Tokyo Chemical Industry Co., Ltd.)
· Methanol (manufactured by Tokyo Chemical Industry Co., Ltd.)
· Methyl methacrylate (also referred to as MMA, manufactured by Tokyo Chemical Industry Co., Ltd.)
. 3-mercapto-1,2-propanediol (manufactured by Wako Pure Chemical Industries, Ltd.)
· V-601 (Dimethyl 2,2'-azobis(2-methylpropionate), manufactured by Wako Pure Chemical Industries, Ltd.)
· IBOA (isobornyl acrylate, ARONIX M-156, manufactured by Toagosei Company, Limited)
· 2EHMA (2-ethylhexyl methacrylate, manufactured by Tokyo Chemical Industry Co., Ltd.)
· LMA (lauryl methacrylate, manufactured by Shin-Nakamura Chemical Co., Ltd., BLEMMER LMA)
· tBuMA (t-butyl methacrylate, manufactured by Wako Pure Chemical Industries, Ltd.)
· CHMA (cyclohexyl methacrylate, manufactured by Wako Pure Chemical Industries, Ltd.)
· St (styrene, manufactured by Wako Pure Chemical Industries, Ltd.)
· ClSt (p-chloro styrene, manufactured by Wako Pure Chemical Industries, Ltd.)
· iPMA (isopropyl methacrylate, manufactured by Tokyo Chemical Industry Co., Ltd.)
· DMAPAA (dimethylaminopropyl acrylamide, manufactured by Kohjin Co., Ltd.)
· PCLA (polycaprolactone acrylate, manufactured by Toagosei Company, Limited, ARONIX M-5300)
· FA-513 (dicyclopentanyl acrylate, manufactured by Hitachi Chemical Co., Ltd., FA-513A)
· 1,2-Diaminopropane (manufactured by Tokyo Chemical Industry Co., Ltd.)
· DMAA (dimethyl acrylamide, manufactured by Kohjin Co., Ltd.)
· CTFA (cyclic trimethylol propane formal acrylate, SR-531, manufactured by Sartomer Company Inc.)
· PEA (2-phenoxyethyl acrylate, Biscoat #192, manufactured by OSAKA ORGANIC CHEMICAL INDUSTRY LTD.)
· NVC (compound name: V-CAP, manufactured by BASF)
· DVE (RAPI-CURE DVE-3, bifunctional radical polymerizable monomer, triethylene glycol divinyl ether, manufactured by ISP Europe)
. TPGDA (tripropylene glycol diacrylate, bifunctional radical polymerizable monomer, NKester APG-200, manufactured by Shin Nakamura Chemical Co., Ltd.)
. HDDA: hexanediol diacrylate, bifunctional radical polymerizable monomer, KS-HDDA, manufactured by Sartomer Company Inc.)
. TMP(PO)TA: trimethylol propane propylene oxide modified triacrylate, trifunctional radical polymerizable monomer, ARONIX M-310, manufactured by Toagosei Company, Limited)
· XDI (xylylene diisocyanate, manufactured by Mitsui Chemicals, Incorporated, TAKENATE 500)
· H12MDI (compound name: dicyclohexylmethane diisocyanate, manufactured by Tokyo Chemical Industry Co., Ltd.) 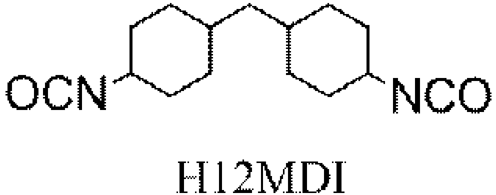
· MDI: (4,4'-diphenylmethane diisocyanate, manufactured by Aldrich) 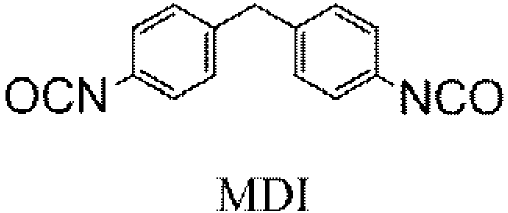
· TMDI: (trimethylhexamethylene diisocyanate (mixture of 2,2,4-2,4,4- isomers), manufactured by Tokyo Chemical Industry Co., Ltd.) 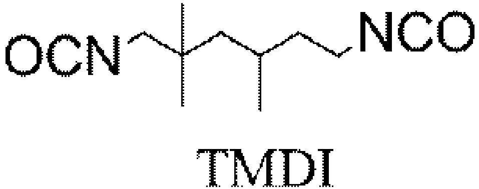
· C10 diol (compound name: 1,2-dihydroxydecane, manufactured by Tokyo Chemical Industry Co., Ltd.)
· C12 diol (compound name: 1,2-dihydroxydodecane, manufactured by Tokyo Chemical Industry Co., Ltd.)
· C16 diol (compound name: 1,2-dihydroxyhexadecane, manufactured by Tokyo Chemical Industry Co., Ltd.)
· PPG1000 (polypropylene glycol diol, number average molecular weight of 1000, manufactured by Wako Pure Chemical Industries, Ltd.)

### Synthesis Example

### (Synthesis of D-1)

To a 300 ml three-neck flask, 116.81 g of methyl ethyl ketone, 50.06 g of methyl methacrylate, 0.6489 g of 3-mercapto-1,2-propanediol, 0.0069 g of V-601 were added and allowed to react for 12 hours at 80°C under nitrogen stream. After performing twice the purification by re-precipitation using an excess amount of methanol, vacuum drying was performed at 100°C to obtain the following compound (D-1).

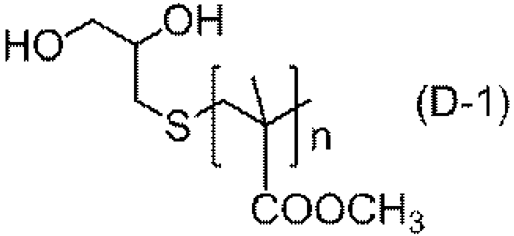

### (Synthesises of D-2 to D-11 and E-1)

The following compounds (D-2) to (D-11) and (E-1) were obtained in the same manner as in the synthesis method of D-1 except that each monomer component was changed as described in Table 1.

**[Table 1]**

| <Tabl e 1> | Monomer 1 | | Monomer 2 | | Number average molecular weight of graft part | Number average molecular weight of polymer | n | SP value of repeating unit (MPa^{1/2}) |
|---|---|---|---|---|---|---|---|---|
| | Compoun d name | Addition amount (g) | Compound name | Addition amount (g) | | | | |
| D-1 | MMA | 50.1 | - | - | 800 | 20000 | 8 | 19.5 |
| D-2 | IBOA | 104.2 | - | - | 1200 | 18000 | 6 | 19.2 |
| D-3 | 2EHMA | 92.1 | - | - | 3300 | 52000 | 18 | 17.6 |
| D-4 | LMA | 127.2 | - | - | 900 | 23000 | 4 | 17.4 |
| D-5 | tBuMA | 71.1 | - | - | 600 | 42000 | 4 | 18.0 |
| D-6 | CHMA | 77.1 | - | - | 2000 | 38000 | 13 | 18.1 |
| D-7 | St | 52.1 | - | - | 1800 | 12000 | 17 | 17.8 |
| D-8 | ClSt | 69.3 | - | - | 800 | 22000 | 6 | 18.4 |
| D-9 | PCLA | 261.4 | - | - | 500 | 58000 | 3 | 19.4 |
| D-10 | FA-513 | 103.2 | - | - | 900 | 12000 | 4 | 20.0 |
| D-11 | iPMA | 32.0 | MMA | 25.0 | 3200 | 42000 | 14 | 18.7 |
| E-1 | DMAPAA | 78.1 | - | - | 2000 | 22000 | 13 | 23.2 |

| | | | | | | | | |
|---|---|---|---|---|---|---|---|---|
| "-" indicates that a component was not contained | | | | | | | | |

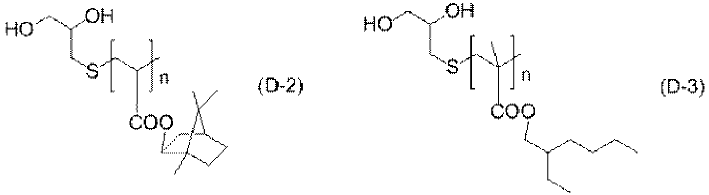

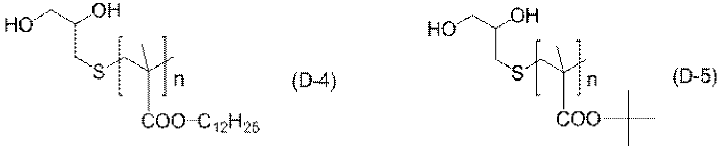

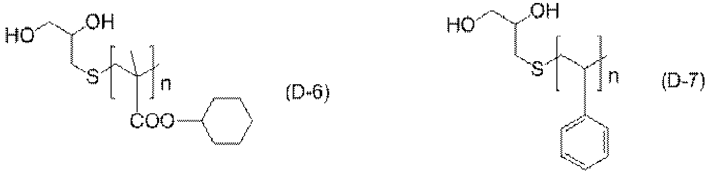

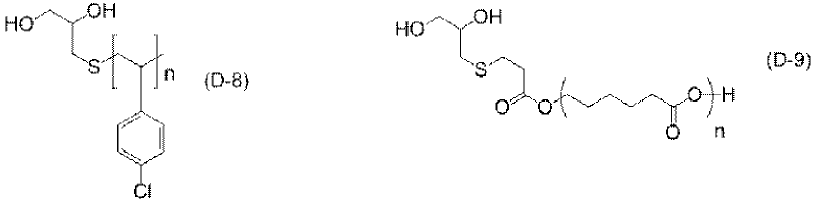

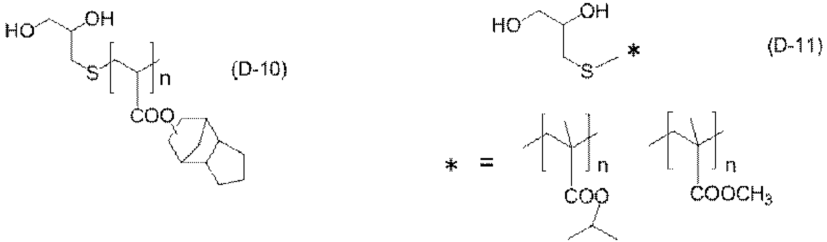

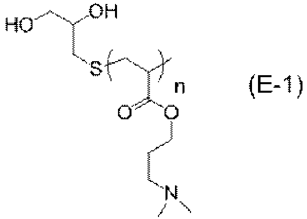

### (Synthesis of A-1 (graft polymer))

After cooling of 130.7 g of the solution of D-1, 10.38 g of xylylene diisocyanate (XDI) and 0.03 g of methanol were added thereto and then allowed to react for 12 hours at 70°C. After dilution to 10% with MEK, the mixture was poured over an excess amount of water/methanol = 50/50, precipitated, then filtered, and dried to obtain the following compound (A-1). In addition, by GPC (using HLC-8020GPC (manufactured by TOSOH CORPORATION), TSKgel SuperHZM-H, TSKgel SuperHZ4000, TSKgel SuperHZ200 (manufactured by TOSOH CORPORATION, 4.6 mmID x 15 cm) as a column and THF (tetrahydrofuran) as an elution liquid), a number average molecular weight was determined. The results are listed in Table 2.

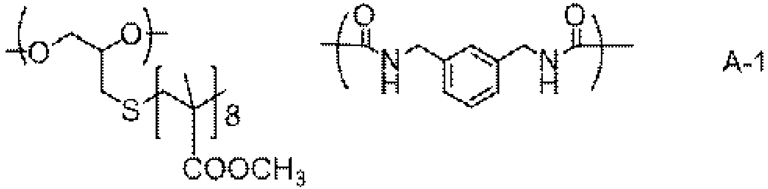

### (Synthesises of A-2 to A-14 (graft polymers) and B-1 to B-2 (graft polymers))

The following compounds (A-2) to (A-14) and (B-1) to (B-2) were obtained in the same manner as in the synthesis method of A-1, except that each component was changed as described in Table 2.

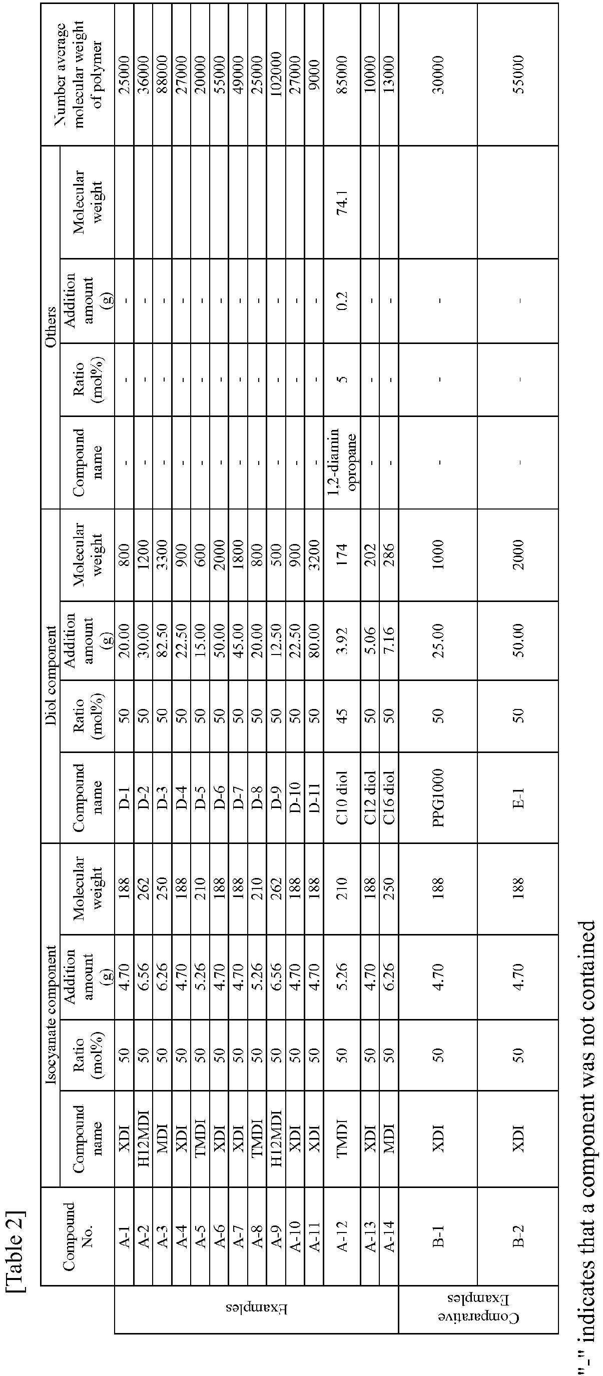

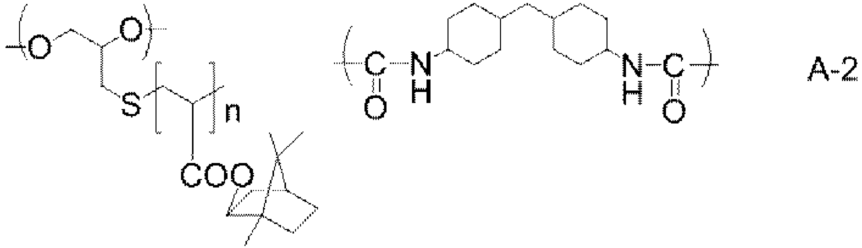

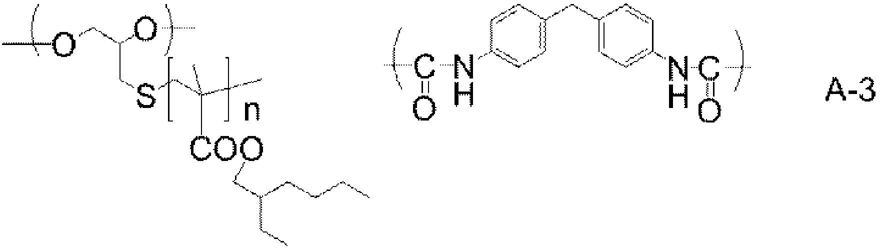

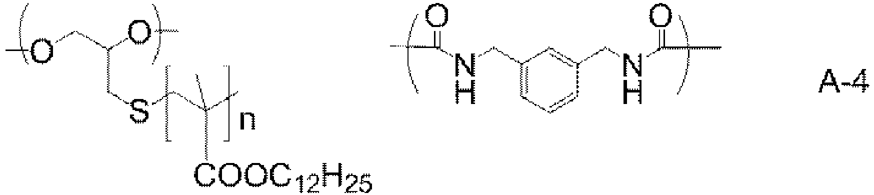

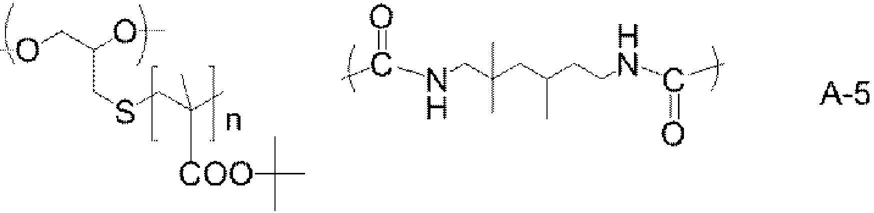

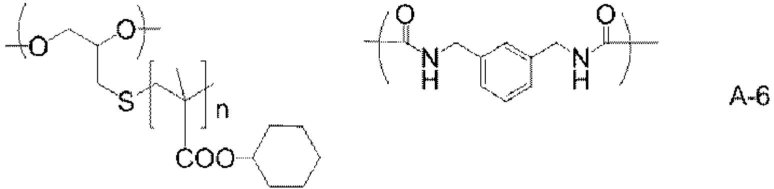

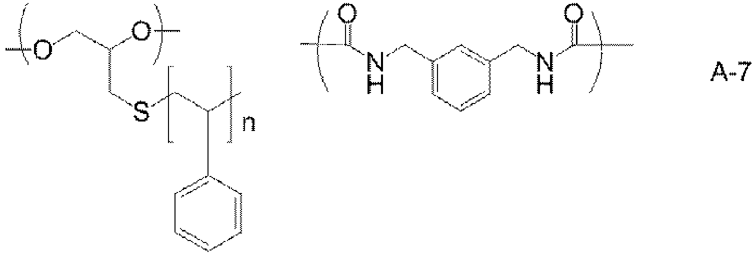

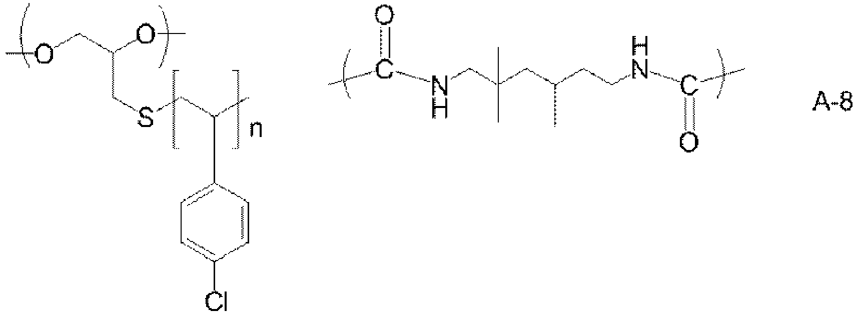

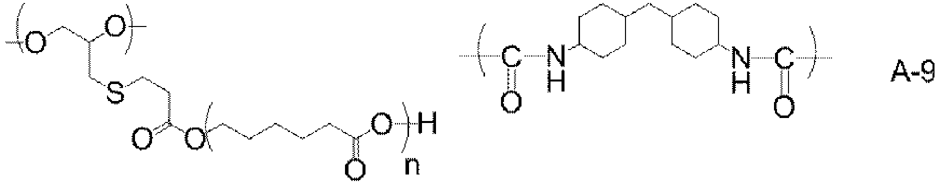

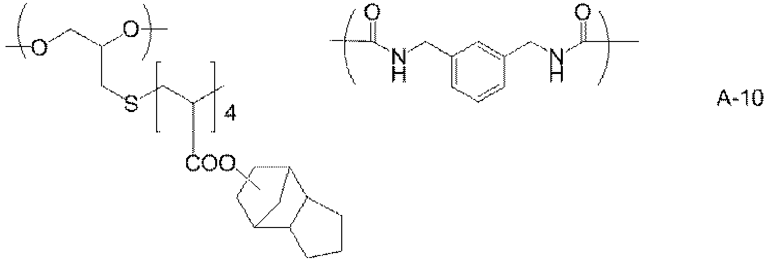

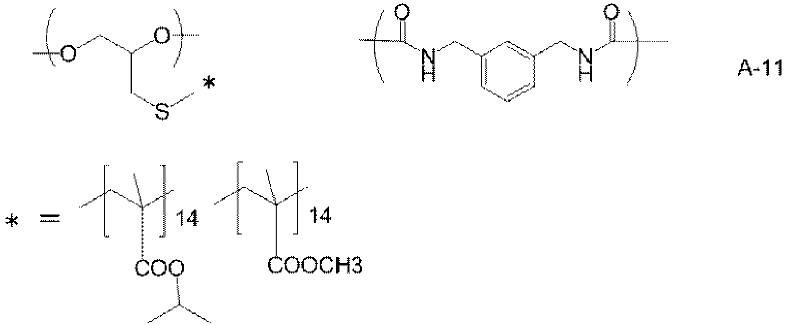

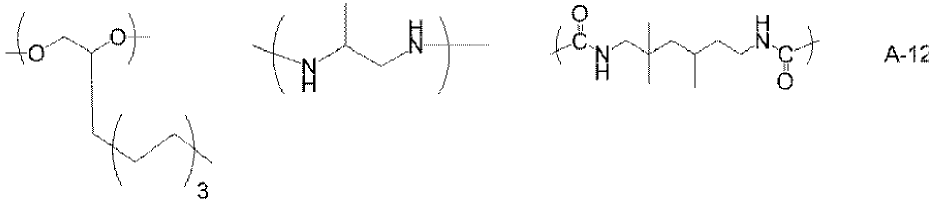

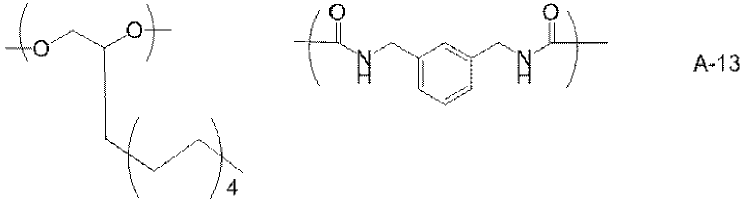

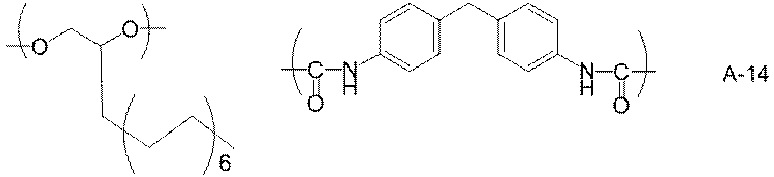

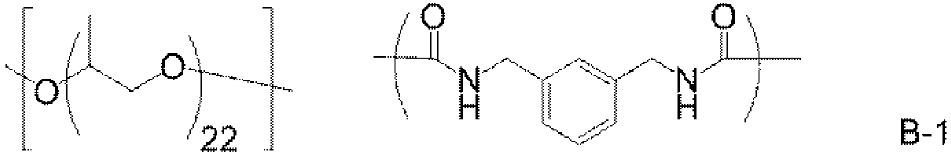

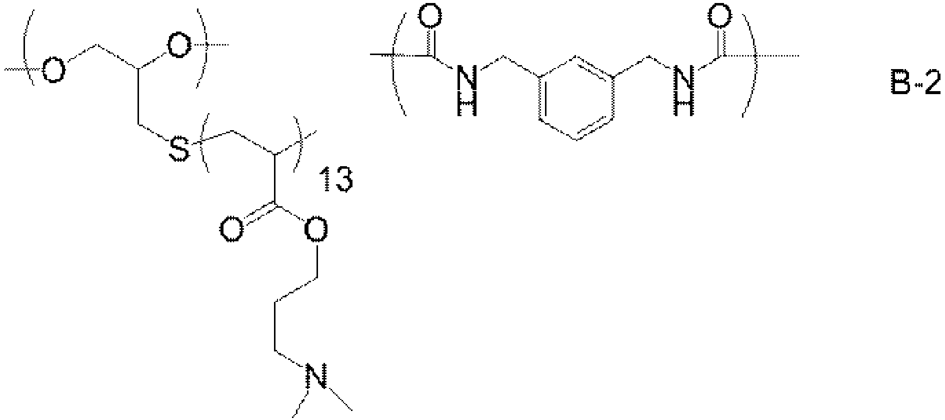

### (Example A1-1)

### -Preparation of clear ink composition (ink composition which does not contain pigment dispersion)-

Components described in Table 3 were mixed with the following components and stirred for 5 min at 1000 revolutions/minute using a mixer (L4R manufactured by Silverson). After that, by using a cartridge filter (product name: PROFILE II AB01A01014J) manufactured by Pall Corporation, the mixture was filtered to prepare the ink composition of Example A1-1.

· GENORAD 16 [manufactured by Rahn, polymerization inhibitor] ··· 0.05 parts
· LUCIRIN TPO [manufactured by BASF, photopolymerization initiator] ··· 6.0 parts
· p-phenylbenzophenone [manufactured by Wako Pure Chemical Industries, Ltd., photopolymerization initiator] ··· 4.0 parts
· KARENZ MT-PE1 [polyfunctional thiol compound, pentaerythritol tetrakis(3-mercaptobutyrate), Showa Denko K.K., chain transfer agent] ··· 2.0 parts
· BYK 307 [manufactured by BYK Chemie, surfactant] ··· 0.05 parts

### -Evaluation of adhesion property-

As a recording medium, a polycarbonate sheet (PC, manufactured by Teijin Chemicals Ltd.) and an acryl sheet (Acryl, manufactured by JAPAN ACRYACE CORPORATION) were used. The surface of each sheet was coated with the obtained ink composition of Example A1-1 using a K hand coater (bar No. 2) so as to give a wet film thickness of 12 µm. Subsequently, the ink composition applied was cured with an active energy ray using a CSOT UV mini conveyor for experimental use (manufactured by GS Yuasa Power Supply Ltd.) equipped with a MAN250L ozone-free metal halide lamp and set at a conveyor speed of 9.0 m/min and an exposure intensity of 2.0 W/cm². Adhesion property to the recording medium was evaluated using this cured film in accordance with ISO 2409 (cross-cut method) by the criteria below. The results are listed in Table 3.
0: The cut edge was completely smooth, and there was no peeling anywhere in any lattice cell.
1: There was only slight peeling of coated film at cross point of cuts, and the affected cross-cut portion did not exceed 5%.
2: There was peeling along the edge of cuts of the coated film and/or at cross point, and the affected cross-cut portion was greater than 5% but did not exceed 15%.
3: There was a large amount of peeling along the edge of cuts of the coated film in a part of or in a whole area, and/or various parts of lattice cells were partially or completely peeled, and the affected cross-cut portion was greater than 15% but did not exceed 35%.
4: There was a large amount of peeling along the edge of cuts of the coated film in a part of or in a whole area, and/or lattice cells of several areas were partially or completely peeled, and the affected cross-cut portion was greater than 35% but did not exceed 65%.
5: Level of peeling exceeded 65%.

### -Preparation of sample for evaluating wet heat resistance-

### <Inkjet image recording>

First, the clear ink composition prepared in Example A1-1 was filtered through a filter having absolute filtration accuracy of 2 µm.

By using an commercially available inkjet recording device (trade name: LUXEL JET UV350GTW, manufactured by Fujifilm Corporation) having piezo type inkjet nozzle, recording on a recording medium [(polycarbonate resin (PANRITE PC-1151), thickness; 500 µm, manufactured by Teijin Chemicals Ltd.), or (acryl resin (ACRYLITE E), thickness; 30 mm, manufactured by Mitsubishi Rayon Co., Ltd.)] was performed under the condisitions at fine mode and at lamp 5. The ink supply system included a main tank, a supply tube, an ink supply tank immediately before the inkjet head, a filter, and a piezo type inkjet head. Temperature control was performed such that, by thermally insulating or heating the section from the ink supply tank to the inkjet head unit, the nozzle part was always at 45°C ± 2°C. The piezo type inkjet head may be operated such that dots of multiple sizes of from 8 p1 to 30 p1 were jetted with a resolution of 600 × 450 dpi to form a solid image. The dpi (dot per inch) referred in the invention means the dot number per 2.54 cm.

### -Evaluation of wet heat resistance-

The printed coated film of 3 cm × 3 cm was placed in an incubator at 70°C and at 90 RH% such that the coated film was placed face up. After 192 hours, a change in film shape was observed with the naked eye and an optical microscope at a magnification of 50. The results are described in Table 3.
Grade A: no change in coated film.
Grade B: there was peeling and deformation of the coated film that was identifiable under optical microscope, even though it was hardly recognizable with the naked eye.
Grade C: there was a peeling and deformation of coated film that was identifiable with the naked eye.

### (Examples A1-2 to A1-18 and Comparative Examples B1-1 to B1-5)

Ink compositions of Examples A1-2 to A1-18 and Comparative Examples B1-1 to B1-5 were prepared in the same manner as in Example A1-1 except that type and addition amount of the polymerizable compound and graft polymer were changed as described in Table 3. Thereafter, evaluation of the adhesion property and wet heat resistance was performed. The results are listed in Table 3.

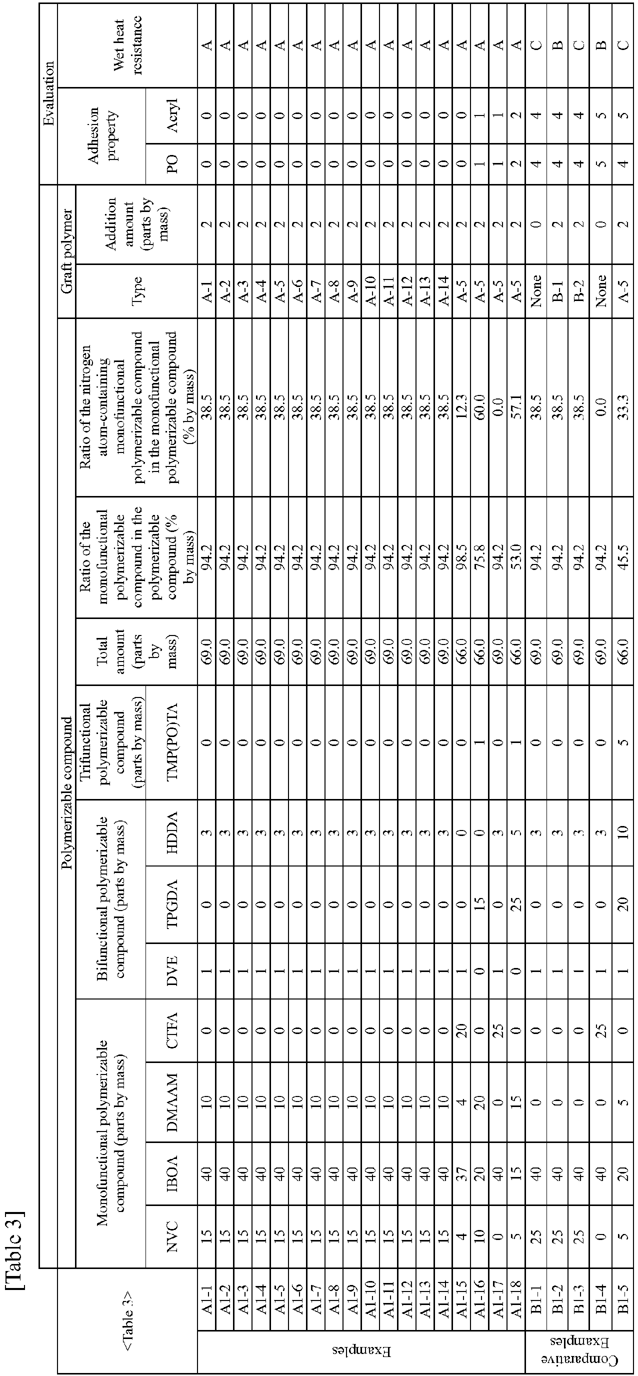

### (Preparation of pigment dispersion)

The following the pigment, dispersing agent, and solvent were mixed and stirred for 10 min at 2500 revolutions/minute using a mixer (L4R manufactured by Silverson). Subsequently, the mixture was added to a bead mill disperser DISPERMAT LS (manufactured by VMA), and then dispersion was performed for 6 hours at 2,500 revolutions/minute using YTZ ball with diameter of 0.65 mm (manufactured by NIKKATO CORPORATION) to prepare the pigment dispersion of each color (Y, M, C, K and W).

Yellow pigment dispersion (Y)
· Pigment: C.I. Pigment Yellow 12 ··· 10 parts
· Dispersing agent: Polymer dispersing agent [manufactured by The Lubrizol Corporation, SOLSPERSE 32000] ··· 5 parts
· Monofunctional polymerizable compound: 2-phenoxyethyl acrylate [PEA, Biscoat #192, manufactured by OSAKA ORGANIC CHEMICAL INDUSTRY LTD.] ··· 85 parts

Magenta pigment dispersion (M)
· Pigment: C.I. Pigment Red 57:1 ··· 15 parts
· Dispersing agent: Polymer dispersing agent [manufactured by The Lubrizol Corporation, SOLSPERSE 32000] ··· 5 parts
· Monofunctional polymerizable compound: 2-phenoxyethyl acrylate ···80 parts

Cyan pigment dispersion (C)
· Pigment: C.I. Pigment Blue 15:3 ··· 20 parts
· Dispersing agent: Polymer dispersing agent [manufactured by The Lubrizol Corporation, SOLSPERSE 32000] ··· 5 parts
· Monofunctional polymerizable compound: 2-phenoxyethyl acrylate ··· 75 parts

Black pigment dispersion (K)
· Pigment: C.I. Pigment Black 7 ··· 20 parts
· Dispersing agent: Polymer dispersing agent [manufactured by The Lubrizol Corporation, SOLSPERSE 32000] ··· 5 parts
· Monofunctional polymerizable compound: 2-phenoxyethyl acrylate ··· 75 parts

White pigment dispersion (W)
· Pigment: MICROLITH WHITE R-A (manufactured by BASF) ··· 20 parts
· Dispersing agent: Polymer dispersing agent [manufactured by The Lubrizol Corporation, SOLSPERSE 32000] ··· 5 parts
· Monofunctional polymerizable compound: 2-phenoxyethyl acrylate ··· 75 parts

### (ExampleA2-1)

### -Preparation of color ink composition (ink composition which contains pigment dispersion)-

Components shown in Table 4 were mixed with the following components and stirred for 15 min at 2,500 revolutions/minute using a mixer (L4R manufactured by Silverson). After that, by using a cartridge filter (product name: PROFILE II AB01A01014J) manufactured by Pall Corporation, the mixture was filtered to prepare the ink composition of Example A2-1.

GENORAD 16 [manufactured by Rahn, polymerization inhibitor] ··· 0.05 parts
· LUCIRIN TPO [manufactured by BASF, photopolymerization initiator] ··· 6.0 parts
· p-phenylbenzophenone [manufactured by Wako Pure Chemical Industries, Ltd., photopolymerization initiator] ··· 4.0 parts
· KARENZ MT-PE1 [polyfunctional thiol compound, pentaerythritol tetrakis(3-mercaptobutyrate), Showa Denko K.K., chain transfer agent] ··· 2.0 parts
· BYK 307 [manufactured by BYK Chemie, surfactant] ··· 0.05 parts

The obtained ink composition of Example A2-1 was evaluated in terms of the adhesion property and wet heat resistance as described above. The results are listed in Table 4.

### (Examples A2-2 to A2-21 and Comparative Examples B2-1 to B2-5)

Ink compositions of Examples A2-2 to A2-21 and Comparative Examples B2-1 to B2-5 were prepared in the same manner as in Example A2-1 except that type and addition amount of the polymerizable compound, graft polymer, and pigment dispersion were changed as described in Table 4. Thereafter, evaluation of the adhesion property and wet heat resistance was performed. The results are listed in Table 4.

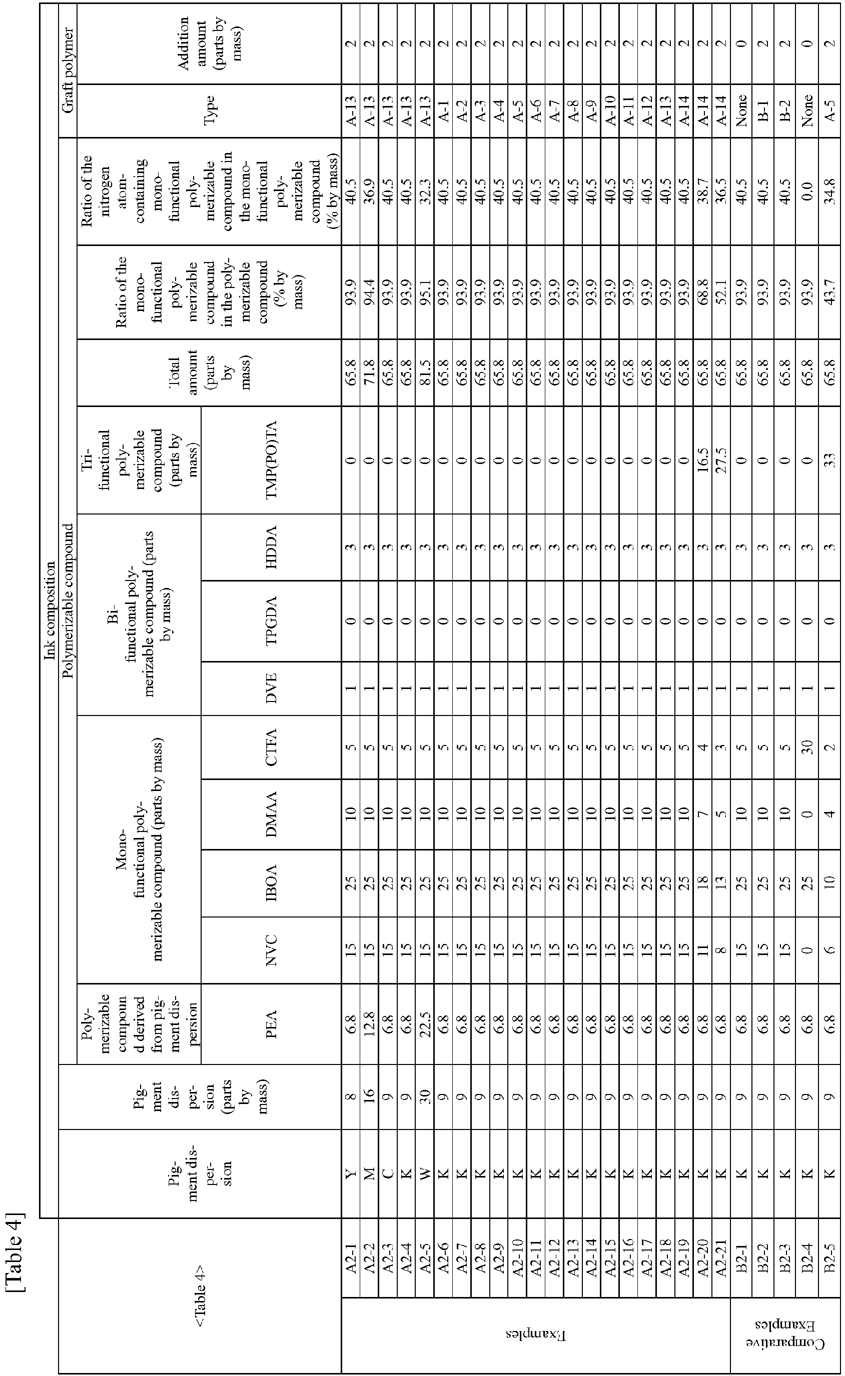

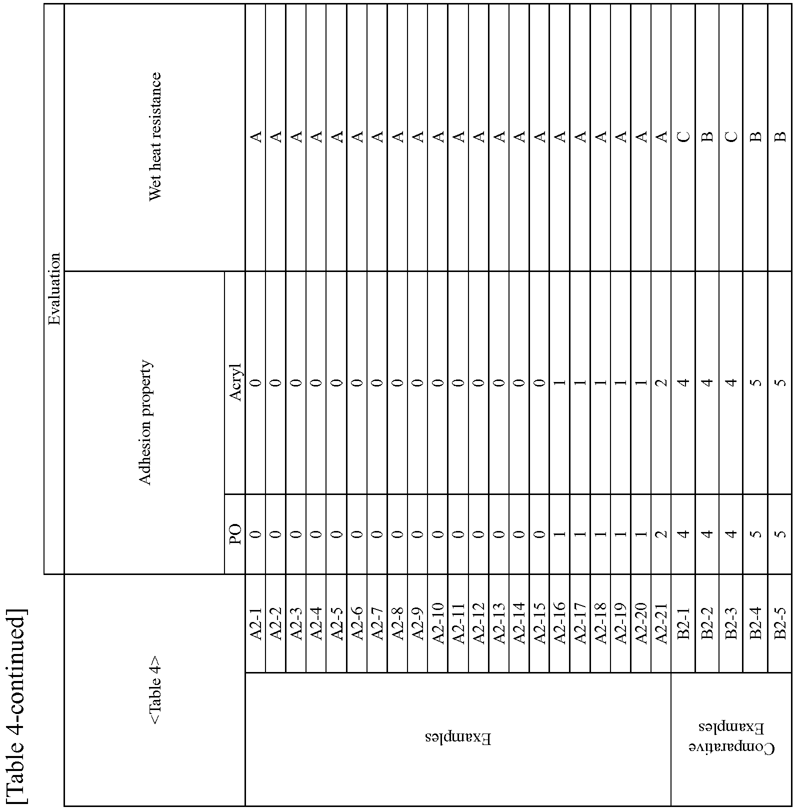

As is understood from Tables 3 and 4, the ink compositions of the Examples according to the invention can be jetted using an inkjet system, and have superior adhesion properties and superior wet heat resistance, as compared to the ink compositions of the Comparative Examples.

Disclosure of Japanese Patent Application No. 2011-070716 is entirely incorporated by reference in the present specification.

All publications, patent applications, and technical standards mentioned in this specification are herein incorporated by reference to the same extent as if each individual publication, patent application, or technical standard was specifically and individually indicated to be incorporated by reference.

## Claims

1. An ink composition, comprising:
a graft polymer having a graft main chain having at least one selected from the group consisting of a urethane structure and a urea structure and a graft side chain including the following Structure Gs;
a polymerizable compound; and
a polymerization initiator,
wherein the polymerizable compound comprises a monofunctional polymerizable compound, and a total content of the monofunctional polymerizable compound in the ink composition is 50% by mass or more with respect to a total content of the polymerizable compound, and
wherein the Structure Gs comprises a structure having three or more repeating units, each of which is formed from an atomic group selected from the group consisting of a carbon atom, a hydrogen atom, an oxygen atom, a sulfur atom and a halogen atom, and in which an SP value of the repeating units is from 17 (MPa)^{1/2} to 20 (MPa)^{1/2}.

2. The ink composition according to claim 1, comprising a nitrogen atom-containing monofunctional polymerizable compound as the monofunctional polymerizable compound.

3. The ink composition according to claim 2, wherein the nitrogen atom-containing monofunctional polymerizable compound comprises a compound represented by the following Formula (M1) or (M2): 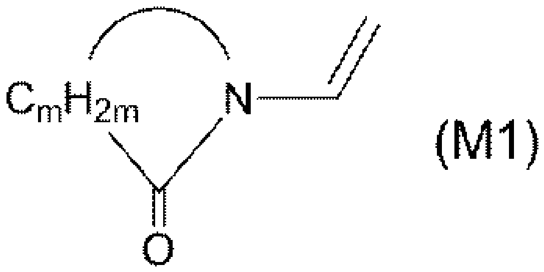 wherein, in Formula (M1), m represents an integer from 2 to 6,. and 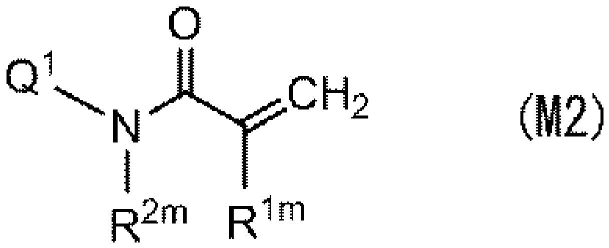 wherein, in Formula (M2), Q¹ represents a monovalent group; R^{1m} represents a hydrogen atom or a methyl group; R^{2m} represents a hydrogen atom, an alkyl group, or an aryl group; and Q¹ and R^{2m} may bind to each other to form a ring.

4. The ink composition according to claim 2 or 3, wherein a total content of the nitrogen atom-containing monofunctional polymerizable compound is from 10% by mass to 90% by mass with respect to a total content of the monofunctional polymerizable compound in the ink composition.

5. The ink composition according to any one of claims 1 to 4, wherein the repeating units in the Structure Gs comprise at least one selected from the group consisting of a polyethylene structure, a polypropylene structure, a poly(meth)acrylic acid ester structure, a polyester structure, and a polystyrene structure.

6. The ink composition according to any one of claims 1 to 5, wherein the graft main chain comprises both the urethane structure and the urea structure.

7. The ink composition according to any one of claims 1 to 6, wherein the graft polymer comprises at least one structure selected from the group consisting of the following Formula (G1) and the following Formula (G2): 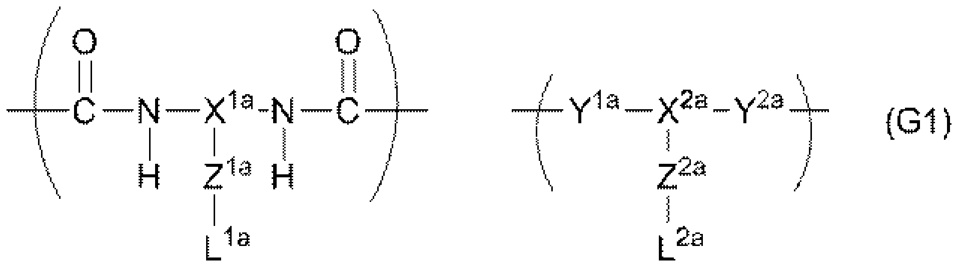 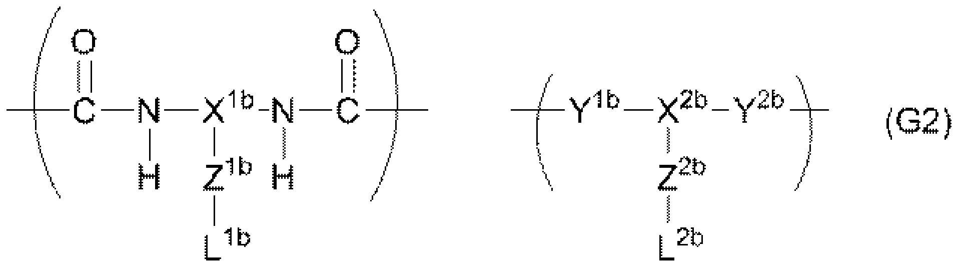 wherein, in Formulae (G1) and (G2), X^{1a}, X^{2a}, X^{1b} and X^{2b} each independently represent a residue obtained by removing three hydrogen atoms from a hydrocarbon having 2 to 16 carbon atoms; Z^{1a} and Z^{2b} each independently represent a single bond, or a divalent group selected from the group consisting of a sulfide bond (-S-), an ester bond (-COO- or -OCO-), an ether bond, and a urethane bond (-NHCOO- or -OCONH-); Z^{2a} and Z^{1b} each independently represent a single bond, or a divalent group selected from the group consisting of an alkylene group, an arylene group, a sulfide bond (-S-), an ester bond (-COO- or -OCO-), an ether bond, and a urethane bond (-NHCOO- or -OCONH-); Y^{1a}, Y^{2a}, Y^{1b} and Y^{2b} each independently represent -O- or -NR^{y}-, wherein R^{y} represents a hydrogen atom or an alkyl group; L^{1a} and L^{2b} each independently represent a hydrogen atom or an alkyl group having 2 to 16 carbon atoms; and L^{2a} and L^{1b} each independently represent a group including the Structure Gs.

8. The ink composition according to any one of claims 1 to 7, wherein the graft polymer is nonpolymerizable.

9. The ink composition according to any one of claims 1 to 8, further comprising a colorant.

10. The ink composition according to any one of claims 1 to 9, being for inkjet recording.

11. An image forming method comprising:
an ink application process of applying the ink composition according to any one of claims 1 to 10 to a recording medium; and
an irradiation process of irradiating the applied ink composition with an active energy ray.

12. The image forming method according to claim 11, wherein the ink application process comprises a process of applying the ink composition by an inkjet method.
